# EUROPÄISCHE PATENTSCHRIFT

(11) **EP 3 565 077 B1**
(45) Veröffentlichungstag und Bekanntmachung des Hinweises auf die Patenterteilung: **05.01.2022**
(21) Anmeldenummer: 18170846.2
(22) Anmeldetag: 04.05.2018
(51) Int. Cl.: H02J 3/01, H02M 1/12, H02J 3/18, H02J 3/46, H02J 3/16, H02J 13/00, H02J 3/00

(54) **AKTIVER FILTER**
ACTIVE FILTER
FILTRE ACTIF

(43) Veröffentlichungstag der Anmeldung: 06.11.2019
(73) Patentinhaber: FRAUNHOFER-GESELLSCHAFT zur Förderung der angewandten Forschung e.V., 80686 München (DE)
(72) Erfinder: LANG, Nadine Ramona, 91058 Erlangen (DE); HECKEL, Thomas, 91058 Erlangen (DE); GALEK, Marek, 82398 Polling (DE); ZIEGMANN, Markus, 91083 Baiersdorf (DE); NAIK, Hari Suman, 90419 Nürnberg (DE); LURZ, Fabian, 91052 Erlangen (DE)
(74) Vertreter: Stöckeler, Ferdinand

(56) Entgegenhaltungen:
- WO-A1-2015/130289
- US-A1- 2009 200 994
- US-A1- 2013 184 894
- US-A1- 2014 306 533
- US-A1- 2017 155 253
- US-B2- 8 249 758
- COLAK I ET AL: "Experimental study on reactive power compensation using a fuzzy logic controlled synchronous motor", ENERGY CONVERSION AND MANAGEMENT, ELSEVIER SCIENCE PUBLISHERS, OXFORD, GB, vol. 45, no. 15-16, 1 September 2004 (2004-09-01), pages 2371-2391, XP004509670, ISSN: 0196-8904, DOI: 10.1016/J.ENCONMAN.2003.11.015
- JIBHAKATE CHAITANYA N ET AL: "Reactive Power Compensation Using Induction Motor Driven by Nine Switch AC-DC-AC Converter", IEEE ACCESS, vol. 6, 6 December 2017 (2017-12-06), pages 1312-1320, XP011677437, DOI: 10.1109/ACCESS.2017.2778291 [retrieved on 2018-02-14]
- COLAK I ET AL: "Reactive power compensation using a fuzzy logic controlled synchronous motor", ENERGY CONVERSION AND MANAGEMENT, ELSEVIER SCIENCE PUBLISHERS, OXFORD, GB, vol. 44, no. 13, 1 August 2003 (2003-08-01), pages 2189-2204, XP004414482, ISSN: 0196-8904, DOI: 10.1016/S0196-8904(02)00250-9

## Beschreibung

### Stand der Technik

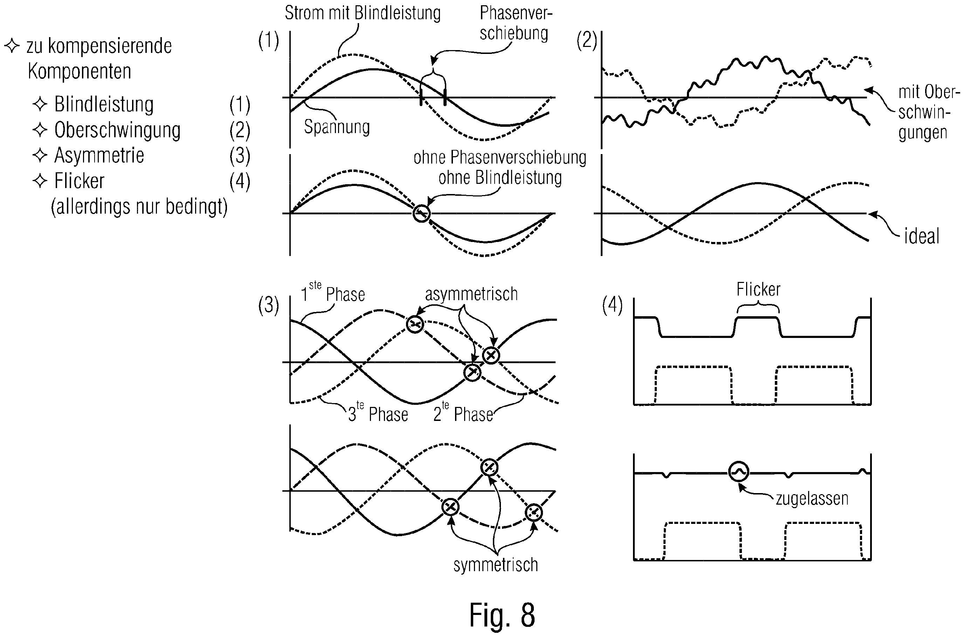

Stromversorgungsnetze versorgen Verbraucher mit Wirkleistungen. Trotzdem sind keine idealen Verhältnisse möglich. Zum Beispiel können hohe Blindleistungen verursacht werden, insbesondere wenn eine Anlage mit Leistungselektronikelementen versehen ist. Bekannt sind verschiedene Phänomene, die die Netzqualität, z.B. durch Oberschwingungsströme, Asymmetrie, Flicker und Austausch an Blindleistung, reduzieren. Fig. 8 zeigt Beispiele von Blindleistung (mit Phasenverschiebung zwischen Strom und Spannung), Oberschwingungen, Asymmetrie (zwischen verschiedene Phasen) und Flicker in Vergleich mit idealen Umständen.

Aktive Filter sind dafür bekannt, die Netzqualität zu erhöhen. Aktive Filter bestehen, z.B., aus einer Mehrzahl von aktiven Wechselrichtern, die z.B. Blindleistungskompensationen bereitstellen.

Ein Beispiel ist BANGIA, Sakshi, et al. NOVEL CONTROL STRATEGIES FOR DISTRIBUTED ACTIVE FILTER. Electrical and Electronics Engineering: An International Journal (ELELIJ) Vol., 2., 2013. Bei der hier genannten Veröffentlichung werden für Verbraucher zusätzliche aktive Filter eingesetzt. Diese aktiven Filter bestehen aus zusätzlichen Komponenten, die nur für die Kompensation hergestellt werden.

Die Druckschrift US2017/155253A1 offenbart ein System umfassend eine Steuereinheit mit einem Prozessor und einer Kommunikationsschnittstelle. Die Kommunikationsschnittstelle ist so konfiguriert, dass sie mit einer oder mehreren Ladestationen kommuniziert, die elektrisch gekoppelt sind, um elektrische Energie von einem Stromverteilungsnetz zu empfangen, und die so konfiguriert sind, dass sie selektiv eine oder mehrere an die Ladestationen angeschlossene Energiespeichereinrichtungen laden. Der Prozessor ist so konfiguriert, dass er erste Steuersignale für die Kommunikation durch die Kommunikationsschnittstelle mit einer oder mehreren Ladestationen erzeugt, um die Übertragung von Blind- und/oder Wirkleistung von den Ladestationen zum Stromverteilungsnetz zu steuern. Die Steuersignale werden zumindest teilweise auf der Grundlage eines Lastzyklusprofils einer oder mehrerer elektrischer Maschinen erzeugt, die elektrisch an das Stromverteilungsnetz gekoppelt sind.

Die Druckschrift US2013/184894A1 offenbart ein System und Verfahren zur Steuerung eines elektrischen Leistungsnetzes.

Die Druckschrift WO2015/130289A1 offenbart ein Verfahren und eine Vorrichtung zur Koordinierten Blindleistungsregelung in einem Windpark.

Die Druckschrift US2014/306533A1 offenbart einen virtuellen Wechselrichter für Stromerzeugungseinheiten.

Die Druckschrift US2009/200994A1 offenbart ein Verfahren und eine Vorrichtung zur verteilten Blindleistungskompensation.

Die Druckschrift US8249758B2 offenbart ein Kraftwerk zum Bereitstellen von elektrischer Leistung für ein Stromnetz.

Die Druckschrift "Experimental study on reactive power compensation using a fuzzy logic controlled synchronous motor" (Colak et al.), XP004509670, offenbart ein Verfahren zur Kompensation von Blindleistung.

Die Druckschrift *"*Reactive power compensation using induction motor driven by nine switch AC-DC converter" (Chaintanya et al.), XP011677437*,* offenbart ein Verfahren zur Kompensation von Blindleistung mittels Induktionsmotoren.

Die Druckschrift *"*Reactive power compensation using fuzzy logic controlled synchronous motor" (Colak *et al.)* offenbart eine Technik zur Blindleistungskompensation mittels eines synchronen Motors mit Fuzzy-Logik-Steuerung.

### Abbildungen

Fig. 1: System bei verteilten aktiven Filtern, wobei Motorumrichter mit integrierter Steuerung als Leistungswandler für Verbraucher agieren.
Fig. 2: System bei verteilten aktiven Filtern, wobei Umrichter mit integrierter Steuerung (C1 ...C3) als Wandler für die Energieerzeugung (Produzenten) agieren.
Fig. 3: Gesamtaufbau (Leistungsfluss und Ansteuerung).
Fig. 4: Mögliches Ansteuerverfahren eines Umrichters im Verbund.
Fig. 5: Nichtlinearer Verbraucher (rechts) mit Kompensation durch drei Umrichter (Mitte) am einphasigen Netzanschluss (links) gemäß Fig. 1.
Fig. 6: Stromverlauf am nichtlinearen Verbraucher (oben) sowie am einphasigen Netzanschluss (unten) bei Nutzung des Ansteuerverfahrens "aktiver verteilter Filter".
Fig. 7: System nach einem Ausführungsbeispiel.
Fig. 8: Unerwünschtes Phänomen im Stand der Technik im Vergleich mit idealen Umständen
Fig. 9: System nach einem Ausführungsbeispiel.
Fig. 10: Vorrichtung nach einem Ausführungsbeispiel.
Fig. 11: System nach einem Ausführungsbeispiel.
Figs. 12 und 13: Methode nach Ausführungsbeispielen.

### Zusammenfassung

Die Erfindung ist in den unabhängigen Ansprüchen 1 und 15 definiert.

### Ausführungsbeispiele

Die Erfinder haben verstanden, dass es möglich ist, eine aktive Filterfunktion zu erhalten, selbst dann, wenn anstatt von Wechselrichtern, die nur die Filterfunktion haben, auch mindestens ein Schaltungsaufbau (z.B. Wechselrichter, Umrichter, Inverter) benutzt wird, der auch für andere Funktionen (z.B. einen Motor anzutreiben) benutzt werden kann. Da die Maschinen in einer industriellen Umgebung oft stillstehen oder nicht mit ihrer Nennleistung betrieben werden, können ihre Leistungsreserven intelligent genutzt werden und, z.B., Blindleistung mit dem Netzwerk ausgetauscht werden, um die Qualität der Stromversorgung zu erhöhen. Ausführungsbeispiele werden nachfolgend beschrieben, die z.B. die folgende Vorrichtung zeigen:
- eine lokale Vorrichtung (z. B., 702-706) zur Verbindung mit einem Stromversorgungsnetz (z. B., 708), wobei die lokale Vorrichtung (z. B., 702-706) folgende Merkmale aufweist:
   eine Lokale-Vorrichtung-Steuerung (z. B., 710), die ausgebildet ist, um einen lokalen Schaltungsaufbau (z. B., 712) zu steuern, um eine lokale Leistungsumwandlung (z. B., 714-718) zwischen dem Stromversorgungsnetz (z. B., 708) und einer lokalen Leistungslast (z. B., 720, 724) und/oder eine lokale Leistungsquelle (z. B., 722, 724) durchzuführen, um die lokale Leistungslast (z. B., 720, 724) und/oder die lokale Leistungsquelle (z. B., 722, 724) anzusteuern, so dass Wirkleistung mit dem Stromversorgungsnetz (z. B., 708) ausgetauscht wird;
   eine Kommunikationssteuerung (z. B., 726), die ausgebildet ist, um eine Kommunikation (z. B., 728) zwischen der Lokale-Vorrichtung-Steuerung (z. B., 710) und zumindest einer entfernten Vorrichtung (z. B., 750) zuzulassen (z.B., veranlassen), so dass:
      die Lokale-Vorrichtung-Steuerung (z. B., 710) Informationen überträgt, die auf einem lokalen Status basieren,
      wobei der lokale Status den lokalen Schaltungsaufbau (z. B., 712), und/oder die lokale Leistungslast (z. B., 720, 724) und/oder die lokale Leistungsquelle (z. B., 722, 724) berücksichtigt, und
      wobei der lokale Status auf elektrischen oder anderen physischen Parametern und/oder Bedingungen und/oder einem Aufbau und/oder einer Fähigkeit eines Modifizierens des Statuses des Stromversorgungsnetzes basiert, und
      die Lokale-Vorrichtung-Steuerung (z. B., 710) Befehle und/oder Anfragen darüber empfängt, wie der lokale Schaltungsaufbau (z. B., 712) arbeiten soll, um den Status des Stomversorgungsnetzes (z. B., 708) zu modifizieren; und/oder
- eine entfernte Vorrichtung (z. B., 750) für die Steuerung eines Stromversorgungsnetzes (z. B., 708), wobei die entfernte Vorrichtung (z. B., 750) folgende Merkmale aufweist:
   eine Entfernte-Vorrichtung-Steuerung (z. B., 760), die ausgebildet ist, um einen Status des Stromversorgungsnetzes (z. B., 708) zu steuern;
   eine Kommunikationssteuerung (z. B., 776), die ausgebildet ist, um eine Kommunikation (z. B., 728) zwischen der Entfernte Vorrichtung-Steuerung (z. B., 760) und zumindest einer lokalen Vorrichtung (z. B., 702-706) zuzulassen (zu veranlassen), so dass:
      die Entfernte-Vorrichtung-Steuerung (z. B., 760) Informationen empfängt, die auf dem lokalen Status der zumindest einen lokalen Vorrichtung (z. B., 702-706) basieren,
         wobei der lokale Status die zumindest eine lokale Vorrichtung (z. B., 702-706) und/oder eine Vorrichtung, die mit zumindest einer lokalen Vorrichtung (z. B., 702-706) verbunden ist, und Bedingungen einer Leistungsumwandlung (z. B., 714-718) mit der zumindest einen lokalen Vorrichtung (z. B., 702-706) berücksichtigt, und
         wobei der lokale Status auf elektrischen oder anderen physischen Parametern und/oder Bedingungen und/oder einem Aufbau und/oder einer Fähigkeit eines Modifizierens des Statuses des Stromversorgungsnetzes basiert, und
      die Entfernte-Vorrichtung-Steuerung (z. B., 760) Befehle darüber überträgt, wie zumindest eine lokale Vorrichtung (z. B., 702-706) arbeiten soll, um den Status des Stromversorgungsnetzes zu modifizieren.

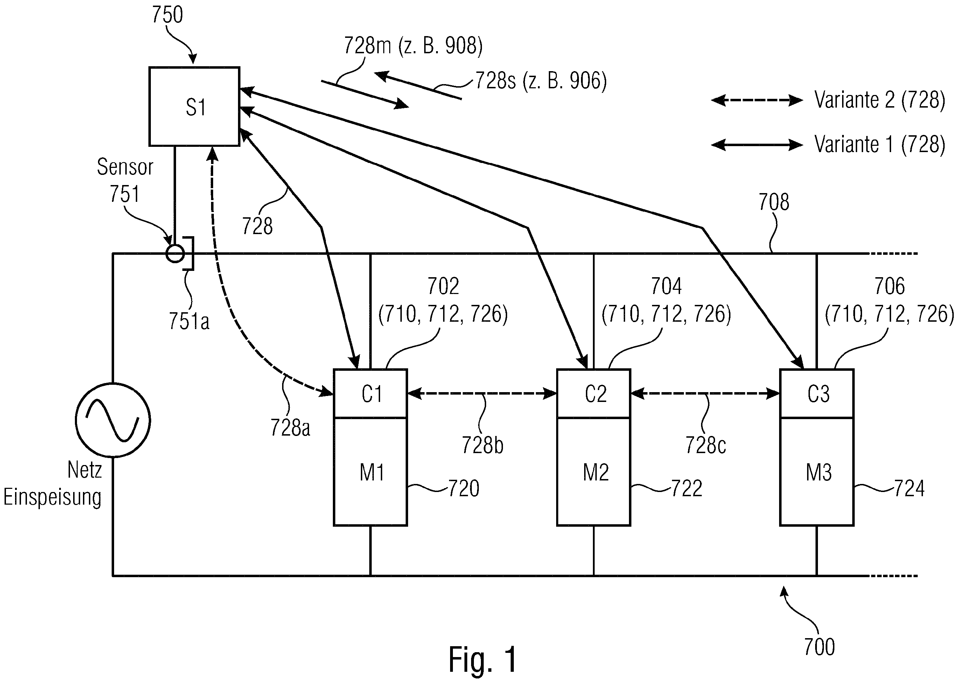

Fig. 1 zeigt ein erfinderisches System 700, wobei ein Stromversorgungsnetz 708 mit einer Mehrzahl von Verbrauchern (oder Versorgern) Wirkleistung austauscht. Das Stromversorgungsnetz 708 kann z.B. einphasig oder mehrphasig (z.B. zweiphasig oder dreiphasig, z.B. mit oder ohne Neutralleiter) sein. Das Stromversorgungsnetz 708 kann ein Wechselstromversorgungsnetz sein. Die Frequenz kann z.B. 50 oder 60 Hz sein (andere Frequenzen sind möglich). Ein Anschlusspunkt 751a zeigt den Punkt, an dem sich der Link an ein externes Versorgungsnetz befindet. Für den Anschlusspunkt 751a ist z.B. das Netzwerk eines Stromanbieters verantwortlich und nach dem Anschlusspunkt 751a ist der Nutzer der Netzwerke 708 (z.B. ein internes Netzwerk) verantwortlich. Anschlusspunkt 751a ist auch der Punkt, an dem die Pegel der geltenden Störaussendungen eingehalten werden müssen. Das Stromversorgungsnetz 708 darf normalerweise eine maximale Nennleistung haben, und die Spannung muss eine bestimmte Frequenz aufweisen.

Eine Mehrzahl von Verbrauchern M1 (720), M2 (722) und M3 (724), von denen einige z.B. elektrische Motoren sein können, kann Wirkleistung mit dem Stromversorgungsnetz 708 austauschen. Die Verbraucher können für Fräsmaschinen und/oder Drehmaschinen und/oder Prägemaschinen und/oder anderen Geräte benutzt werden. Es ist bekannt, dass ein elektrischer Motor in einigen Fällen als Generator betrieben werden kann. Die Erfinder haben trotzdem verstanden, dass es möglich ist, die Blindleistung auszutauschen, um die Qualität der Stromversorgung zu erhöhen. Fig. 1 zeigt lokale Vorrichtungen 702, 704, 706, die die Motorwechselrichter (oder andere lokale Leistungslasten oder Leistungsquellen) bzw. versorgen. Deswegen können erfinderische Motorwechselrichter benutzt werden, um Leistung auszutauschen (insbesondere um Blindleistung auszutauschen), selbst wenn die Motoren 720-724 ihre normale Funktionalität nutzen. Die Motorwechselrichter können, in einigen Ausführungsbeispielen, Oberschwingungen und/oder andere unerwünschte Phänomene reduzieren oder entfernen. In Beispielen wird der lokale Schaltungsaufbau in Shunts mit dem Stromversorgungsnetz 708 verbunden.

In Ausführungsbeispielen umfasst das System 700 mindestens eine entfernte Vorrichtung (750, S1), die z.B. als übergeordnete Steuerung (Leistungsflusssteuerung, intelligente Zwischensteuerung usw.) genutzt werden kann. Die entfernte Vorrichtung 750 kann mindestens einen Sensor 751 benutzen, der elektrische Messwerte ermittelt. Zum Beispiel kann der Strom, die Spannung und/oder die Frequenz des Stromversorgungsnetzes gemessen werden. Durch den Sensor 751 kann die entfernte Vorrichtung 750 Kenntnis von dem eingespeisten Strom erhalten und die Informationen verarbeiten und wissen, welche Gegenmaßnahmen gegen unerwünschte Phänomene ergriffen werden sollen, um die Qualität der Stromversorgung zu erhöhen.

Sollte z.B. die Dreiphasenversorgung nicht symmetrisch sein, dann würden unterschiedliche Spannungen zwischen den verschiedenen Phasen gemessen werden. Die Vorrichtung 750 könnte, z.B., die lokale Vorrichtungen 702, 704, 706 steuern, so dass die Spannungen oder die Ströme symmetrisch werden.

Die Erfinder haben verstanden, dass es möglich ist, die gleiche Funktion zu erreichen wie mit einem reinen aktiven Filter, wenn die Motoren 720-724 und die lokalen Vorrichtungen 702-706 (durch die Motorwechselrichter 712) intelligent kontrolliert werden. Zum Beispiel kann jede lokale Vorrichtung 702-706 Befehle von der entfernten Vorrichtung 750 empfangen, um als Komponente eines aktiven Filters betrieben zu werden. Eine erste lokale Vorrichtung kann z.B. instruiert werden, um eine besondere (z. B., dritte) Harmonische zu kompensieren, während eine zweite Vorrichtung instruiert werden kann, eine andere (z. B., fünfte) Harmonische zu kompensieren.

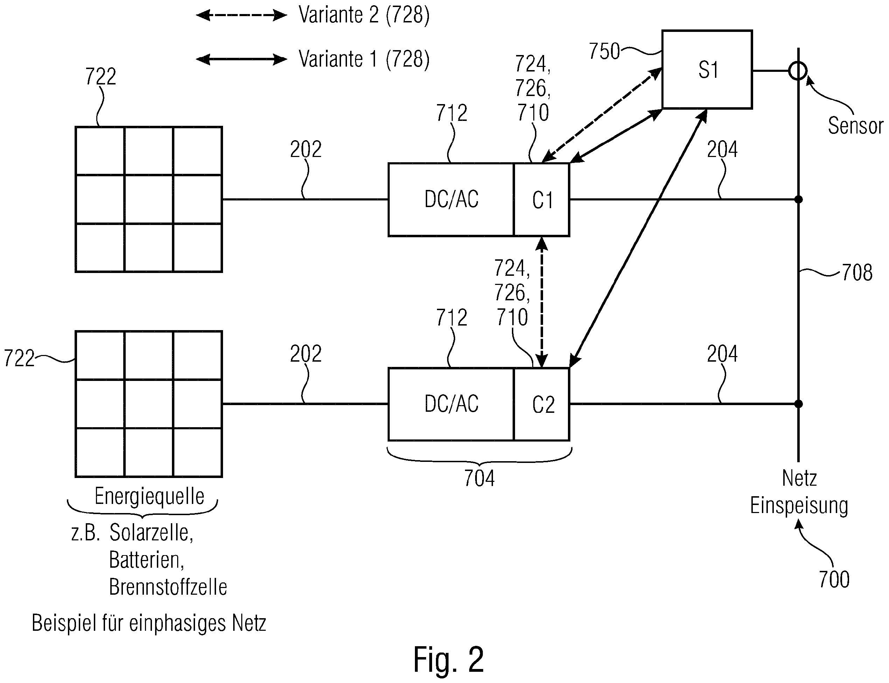

Fig. 2 zeigt ein System 700 (das dasselbe wie das von Fig. 1 sein könnte), welches Energiequellen (z.B. eine Solarzelle, Batterie, Brennstoffzelle usw.) aufweist. Ein Schaltungsaufbau 712 (z.B. ein Gleichrichter, der zwischen Gleichstrom und Wechselstrom Leistung austauscht) kann vorgesehen sein. Die Schaltungsaufbauen 712 können in diesem Fall eine Umwandlung zwischen Gleichstrom 202 und Wechselstrom 204 verursachen. Auch in diesem Fall, kann eine entfernte Vorrichtung 750, die Kenntnis über elektrische Parameter an Stromversorgungsnetzen 708 hat, den lokalen Schaltungsaufbau 712 steuern, damit die Qualität der Stromversorgung erhöht wird. Beispielsweise kann die entfernte Vorrichtung 750 regeln, dass der lokale Schaltungsaufbau 712 asymmetrische Spannungen oder Ströme kompensieren und/oder Blindleistungen mit dem Stromversorgungsnetz 708 austauschen kann.

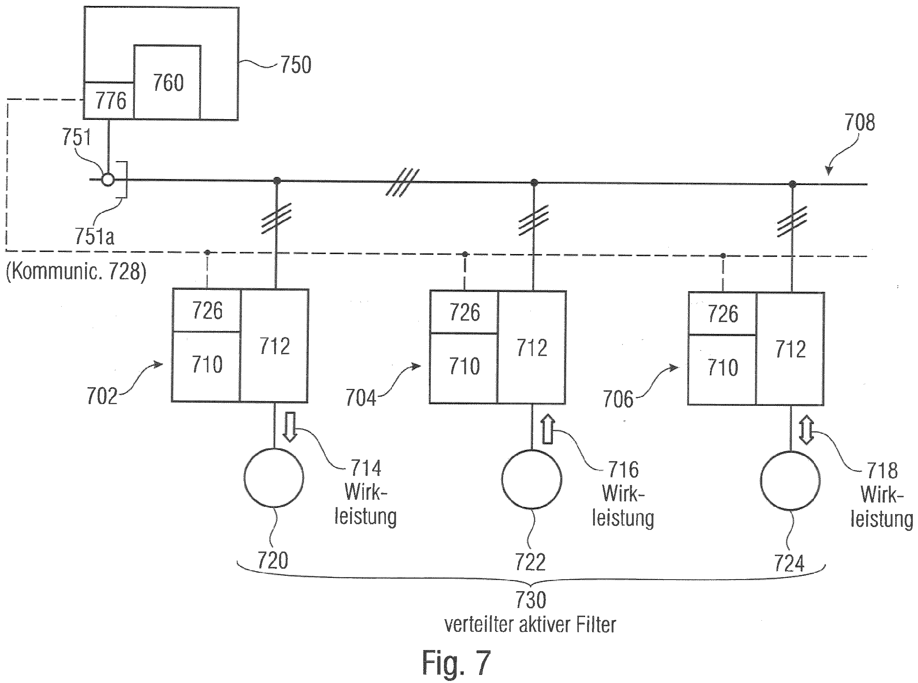

Fig. 7 zeigt einen aktiven verteilten Filter 730, der durch eine Mehrzahl von lokalen Vorrichtungen 702-706 erhalten wird. Jede lokale Vorrichtung 702, 704, 706 wurde konfiguriert, damit Wirkleistung 714, 716, 718 mit einer lokalen Leistungslast oder lokalen Leistungsquelle ausgetauscht werden kann (720, 722, 724).

Gemäß der Erfindung kann auch die Blindleistung ausgetauscht werden. Jede lokale Vorrichtungssteuerung 710 kann eine Kommunikationssteuerung 726 umfassen, die ausgebildet ist, um eine Kommunikation 728 (z.B. digitale Kommunikation, beispielsweise wireless, Kabellos, oder mit Kabel) mit einer Kommunikationssteuerung 776 (oder 726) eines anderen Geräts herzustellen. Insbesondere kann jede lokale Vorrichtung 702-706 Daten an eine andere lokale Vorrichtung schicken oder empfangen oder eine Kommunikation durch eine entfernte Vorrichtung (z.B. zentrale Steuerung) verschicken bzw. empfangen.

Die Kommunikation 728 kann nach einem bekannten Protokoll erhalten werden. Wireless Kommunikationen über Radiofrequenz sind bekannt und können verwendet werden. Zum Beispiel können Bluetooth, WiFi, IEEE 802.11 Protokolle, LTE, GMS, 5G, 4G, 3G-Protokolle verwendet werden. Die Kommunikation 728 kann auch andere physische Phänomene als Radiofrequenzen (z.B. Ultraschall) nutzen. Die Kommunikation 728 kann ein Kabel benutzen. Eine Bus-Topologie kann benutzt werden. Eine Topologie mit einer Mehrzahl von Punkt-zu-Punkt Kanäle kann verwendet werden. Controller-Area-Network, CAN, Systeme, Fieldbussysteme und Foundation-Systeme können verwendet werden. In Beispielen ist jede lokale Vorrichtung 710 konfiguriert, um digitale Daten als Pakete durch die Kommunikationssteuerung 726 zu verschicken und zu empfangen. Jede lokale Vorrichtung kann einen Schaltungsaufbau 712, der ein Wechselrichter, ein Inverter, ein Umrichter und/oder ein Gleichrichter sein kann umfassen. Die Wahl des Schaltungsaufbautyps kann von der Art der Anwendung abhängig sein. Insbesondere kann die Wahl des Inverters von der besonderen Leistungslast 720, 724 und/oder lokalen Leistungsquelle 722, 724 abhängig sein. In dem Beispiel von Fig. 2 ist der Schaltungsaufbau 712 z.B. mindestens ein DC/AC- Umrichter. Im Falle eines Motors, z.B., kann der Wechselrichter 712 in zwei oder vier Quadranten (z.B. Vierquadrantensteller) betrieben werden.

Der Umrichter oder Inverter kann Komponenten aufweisen, die in der Leistungselektronik bekannt sind. Insbesondere können Metall-Oxid-Halbleiter-Feldeffekttransistoren (MOSFET), Bipolartransistoren mit isolierter Gate-Elektrode (IGBT), bipolare Leistungstransistoren, Gate turn-off GTO-Thyristoren, Zweirichtungs-Thyristortriode oder Symistor (TRIAC) usw. verwendet werden. Schaltungen wie Graetz-Schaltungen und/oder Schaltungen mit Halbbrücke oder Vollbrücke können dazu genutzt werden. Die Wechselrichter 712 können monophasig oder mehrphasig (zweiphasig, dreiphasig, u.s.w.) sein. Jede lokale Vorrichtung 702-706 kann eine lokale Vorrichtungssteuerung 710 beinhalten, die die Kommunikation 728 der Kommunikationssteuerung 726 und die Operation der Energieumwandlung des Schaltungsaufbaus 712 steuert und/oder regelt.

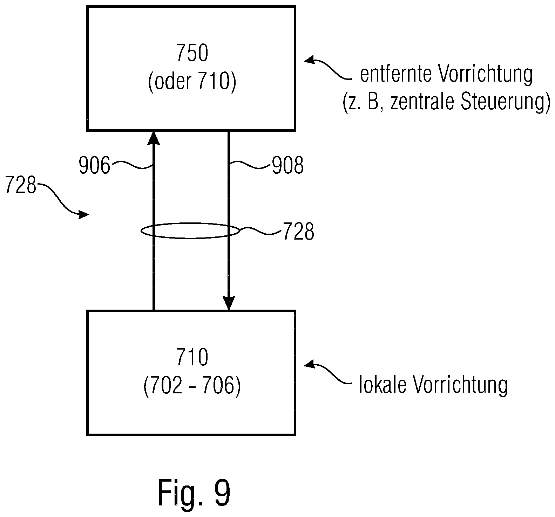

Fig. 9 zeigt eine Kommunikation 728 zwischen einer lokalen Vorrichtung 710 und der entfernten Vorrichtung. Die entfernte Vorrichtung kann eine übergeordnete Steuerung 750 sein, aber in Ausführungsbeispielen kann es auch eine andere lokale Vorrichtung sein (z.B., 710), die als Master- oder Hauptvorrichtung benutzt wird. In Beispielen kann die entfernte Vorrichtung eine selbst lernende lokale Vorrichtung sein.

Die lokale-Vorrichtung zur Steuerung 710 überträgt Informationen 906, die auf dem lokalen Status basieren. Der lokale Status berücksichtigt z.B. den lokalen Schaltungsaufbau 712, die lokale Leistungslast 720, 724 und/oder lokale Leistungsquellen 722, 724. Der lokale Status basiert z.B. auf elektrischen oder anderen physischen Parametern und/oder Bedingungen und/oder einem Aufbau und/oder einer Fähigkeit eines Modifizierens des Statuses des Stromversorgungsnetzes. Die Lokale-Vorrichtung-Steuerung 710 empfängt Befehle und/oder Anfragen darüber 908, wie der lokale Schaltungsaufbau 712 arbeiten soll, um den Status des Stromversorgungsnetzes 708 zu modifizieren.

Die lokale Vorrichtung 702-706 kann ausgebildet sein, um als Informationen 906, die auf dem lokalen Status basieren, zumindest eines der folgenden Elemente bereitzustellen:
- Vorschläge über die Operation für den Austausch von Blindleistung der lokalen Leistungslast 720, 724 und/oder der lokalen Leistungsquelle 722, 724 mit dem Stromversorgungsnetz 708; und/oder
- Informationen über die Wirkleistung und/oder Blindleistung und/oder Nennleistung für den Austausch von Blindleistung zwischen der lokalen Leistungslast 720, 724 und/oder der lokalen Leistungsquelle 722, 724 und dem Stromversorgungsnetz 708; und/oder
- Informationen über das Frequenzintervall für den Austausch von Blindleistung der lokalen Leistungslast 720, 724 und/oder der lokalen Leistungsquelle 722, 724 mit dem Stromversorgungsnetz 708; und/oder
- Informationen über die erforderliche elektrische Leistung durch die Last in der Vergangenheit und/oder in der Zukunft; und/oder
- Informationen über den Wartungsstatus der Lastvorrichtung und ihrer Teilkomponenten.

Deswegen sind die Informationen 906 nützliche Informationen, die die entfernte Vorrichtung (710 oder 750) benutz, um zu erkennen, welche Fähigkeiten jede lokale Vorrichtung 710 hat, um die Stromversorgungsqualität zu erhöhen, z.B. durch Blindleistungsaustausch mit dem Stromversorgungsnetz und/oder durch die Kompensierung einer Oberschwingung.

Die entfernte Vorrichtung (710 oder 750) kann die Informationen 906 empfangen, die auf dem lokalen Status der zumindest einen lokalen Vorrichtung (702-706) basieren,
wobei der lokale Status die zumindest eine lokale Vorrichtung (702-706) und/oder eine Vorrichtung, die mit zumindest einer lokalen Vorrichtung (702-706) verbunden ist, und Bedingungen einer Leistungsumwandlung (714-718) mit der zumindest einen lokalen Vorrichtung (702-706) berücksichtigt, und
wobei der lokale Status auf elektrischen oder anderen physischen Parametern und/oder Bedingungen und/oder einem Aufbau und/oder einer Fähigkeit eines Modifizierens des Statuses des Stromversorgungsnetzes basiert, und
die Entfernte-Vorrichtung-Steuerung (760) Befehle darüber überträgt, wie zumindest eine lokale Vorrichtung (702-706) arbeiten soll, um den Status des Stromversorgungsnetzes (708) zu modifizieren.

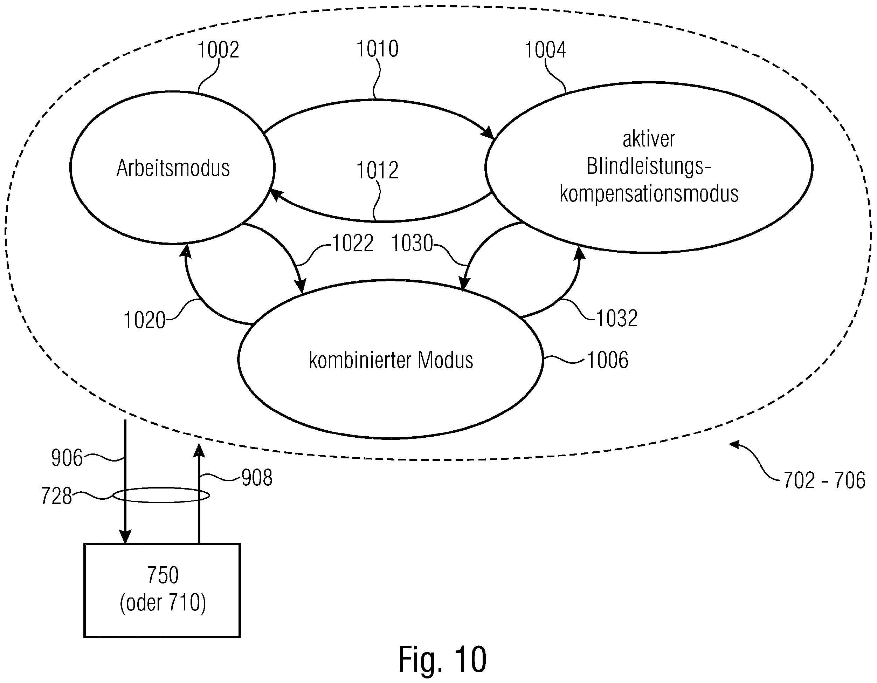

Die lokale Vorrichtung (z.B. 702-706) kann ausgebildet sein, um in zumindest einem der folgenden Modi zu arbeiten (Fig. 10):
- einem Arbeitsmodus (z.B. 1002), bei dem der lokale Schaltungsaufbau (z.B. 712) eine lokale Leistungsumwandlung (z.B. 714-718) zwischen dem Stromversorgungsnetz (z.B. 708) und einer lokalen Leistungslast (z.B. 720, 724) und/oder einer lokalen Leistungsquelle (z.B. 722, 724) durchführt, um die lokale Leistungslast (z.B. 720, 724) zu betreiben und/oder eine Wirkleistung von der lokalen Leistungsquelle (z.B. 722, 724) zu erhalten; und/oder
- einem aktiven Blindleistungskompensationsmodus (z.B. 1004), bei dem der lokale Schaltungsaufbau (z.B. 712) eine lokale Leistungsumwandlung (z.B. 714-718) zwischen dem Stromversorgungsnetz (z.B. 708) und einer lokalen Leistungslast (z.B. 720, 724) und/oder einer lokalen Leistungsquelle (z.B. 722, 724) durchführt, um die Blindleistung zu kompensieren; und/oder
- einem kombinierten Modus (z.B. 1006), bei dem der lokale Schaltungsaufbau (z.B. 712) gleichzeitig Folgendes durchführt:
- eine lokale Wirkleistungsumwandlung (z.B. 714-718) zwischen dem Stromversorgungsnetz (z.B. 708) und einer lokalen Leistungslast (z.B. 720, 724) und/oder einer lokalen Leistungsquelle (z.B. 722, 724); und
- eine lokale Blindleistungsumwandlung (z.B. 714-718) zwischen dem Stromversorgungsnetz (z.B. 708) und einer lokalen Leistungslast (z.B. 720, 724) und/oder einer lokalen Leistungsquelle (z.B. 722, 724), um die Blindleistung zu kompensieren.

Die lokale Vorrichtung (z.B. 702-706) kann ausgebildet sein, um der entfernten Vorrichtung (z.B. 750) als Informationen (z.B. 906), die auf dem lokalen Status basieren, Folgendes anzuzeigen:
- den Modus (1002, 1004 oder 1006), in dem die lokale Vorrichtung momentan arbeitet; und/oder
- einen Modus, bei dem die lokale Vorrichtung bereit ist zu arbeiten.

Wie oben gesagt kann die Vorrichtung 702-706 einen elektrischen Motor 720-724 antreiben. In Ausfürungsbeispielen, wenn der Motor beschleunigt oder jedenfalls ein Drehmoment anlegt (z.B. Leistung von Netz zu Motor), kann der Motorwechselrichter im Arbeitsmodus 1002 sein. Sollte der Motor verlangsamen oder als Generator arbeiten, dann könnte der Motorwechselrichter zu einem aktiven Blindleistungskompensationsmodus 1004 durch den Zustandsübergang 1010 übergehen. Im Modus 1004 kann eine Blindleistungskompensation stattfinden, z.B. wenn der Motor bremst oder als Generator benutzt wird (auch im normalen motorischen Betrieb kann man kompensieren). Sollte in Ausfürungsbeispielen der elektrische Motor nochmals beschleunigen oder ein Drehmoment anlegen, dann könnte der Modus 1002 noch einmal über den Zustandsübergang 1012 erreicht werden. Im Modus 1004 wird der elektrische Motor so gesteuert, dass Blindleistung kompensiert wird. Um dieses Ziel zu erreichen, kann der lokale Schaltungsaufbau 712 benutzt werden, so dass Blindleistung an das Stromnetzwerk 708 zurückgegeben wird. Sollte sowohl eine Wirkleistungsumwandlung als auch eine Blindleistungsumwandlung stattfinden, dann kann der kombinierte Modus 1006 erreicht werden. Zwischen dem Arbeitsmodus 1002 und dem kombinierten Modus 1006 können die Zustandsübergänge 1020 und 1022 genutzt werden. Zwischen dem Modus 1006 und Modus 1004 können die Zustandsübergänge 1030 und 1032 genutzt werden.

Es ist in Ausfürungsbeispielen möglich auch im normalen motorischen Betrieb zu kompensieren. Deswegen ist es in Ausfürungsbeispielen nicht notwendig, dass die Motor bremst, um Modus 1004 zu erreichen,

Die lokale Vorrichtung 710 kann ausgebildet sein, um der entfernten Vorrichtung (z.B. 750) als Informationen (906), die auf dem lokalen Status basieren, Folgendes anzuzeigen:
- einen Modus (z.B. zwischen 1002, 1004, 1006), in dem dieser momentan arbeitet; und/oder
- einen Modus, bei dem die lokale Vorrichtung (z.B. 702-706) bereit ist zu arbeiten (z. B., 1004 oder 1006, wenn die lokale Vorrichtung z.B. in Modus 1002 ist).

Deswegen kann die Information 906 vom folgenden Typ sein: *"ich bin in Arbeitsmodus 1002, aber in 10 Sekunden werde ich in Modus 1004 sein".* Deswegen kann die entfernte Steuerung 750 Kenntnis darüber haben, dass die lokale Vorrichtung in 10 Sekunden in einem anderen Modus sein wird und kann mit einem Befehl 908 angeben, wie der lokale Schaltungsaufbau 712 arbeiten soll, um den Status des Stromversorgungsnetzes 708 zu modifizieren. Der Befehl 908 kann zum Beispiel vom folgenden Typ sein: *"In 5 Sekunden musst du mit einer bestimmten Frequenz und*/*oder Spannung und*/*oder Strom arbeiten und*/*oder die darauffolgende Blindleistung austauschen".*

Insbesondere kann die lokale Vorrichtung 702-706 ausgebildet sein, um zumindest einen der folgenden Schritte durchzuführen:
- Bestimmen eines zukünftigen Statuses (z.B. Modus 1002, 1004, 1006) der lokalen Leistungslast (720, 724) und/oder der lokalen Leistungsquelle (722, 724); und/oder
- Bestimmen der Fähigkeit eines Austauschens von Blindleistung mit dem Stromversorgungsnetz (708); und/oder
- Übermitteln einer Anzeige der Fähigkeit des Austauschens von Blindleistung mit dem Stromversorgungsnetz (708) an die entfernte Vorrichtung (750); und/oder
- Erhalten eines Befehls darüber, wie Blindleistung mit dem Stromversorgungsnetz (708) auszutauschen ist; und/oder
- Einstellen des Leistungsumwandlungsmodus, des Aktivkompensationsmodus oder des kombinierten Modus.

Das Ergebnis dieser Operationen kann z.B. als Informationen 906 an die Steuerung geschickt werden.

Als Reaktion zu einem Befehl 908, kann die lokale Vorrichtung z.B. einen der Zustandsübergänge 1010, 1012, 1020, 1022, 1030, 1032 nehmen und/oder eine der vorhergehenden Operationen durchführen:
- Empfangen von Befehlen und/oder Anfragen, die dem Austausch von Blindleistung der lokalen Leistungslast (720, 724) und/oder der lokalen Leistungsquelle (722, 724) dem Stromversorgungsnetz (708) zugeordnet sind, von der entfernten Vorrichtung (750);
- Verifizieren der effektiven Fähigkeit eines Austauschens der angeforderten Blindleistung, um zu entscheiden, ob der Austausch von Blindleistung durchgeführt werden soll; und
- Anzeigen der Entscheidung für die entfernte Vorrichtung (750), z.B. mit einer neuen Information 906.

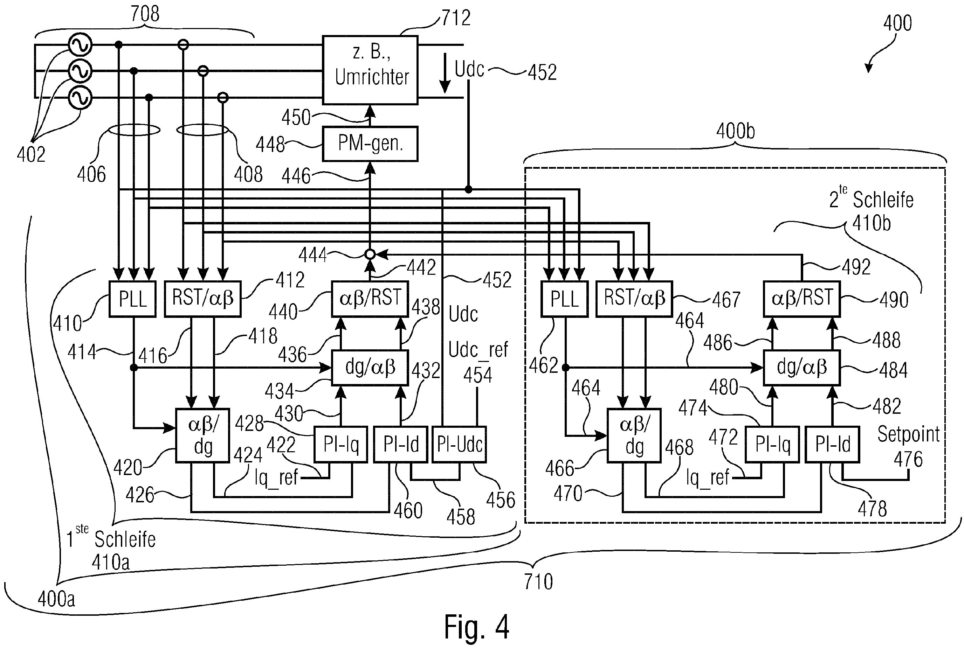

Fig. 4 zeigt ein Ausführungsbeispiel für eine Lokale-Vorrichtung-Steuerung 710. Diese Lokale-Vorrichtung-Steuerung 710 ist ausgebildet, um einen lokalen Schaltungsaufbau (z.B. Umrichter) 712 zu steuern, so dass Wirkleistung und Blindleistung mit dem Stromversorgungsnetz 708 getauscht wird. Das Stromversorgungsnetz 708 ist hier dreiphasig und mit drei Generatoren 402 dargestellt. Stromabwärts von dem Schaltungsaufbau 712 (z.B. an der Seite der Leistungslast 720 oder 724 und/oder an der Seite der lokalen Leistungsquelle 720 oder 724) wird eine Gleichspannung U_{DC} (452) versorgt. Der lokale Schaltungsaufbau 712 könnte als Gleichrichter benutzt werden und/oder zum Beispiel um einen Motor anzutreiben (z.B. ein Gleichstrommotor für den, die Geschwindigkeit zu U_{DC} proportional ist).

Der lokale Schaltungsaufbau 712 kann ausgebildet sein, um die lokale Leistungsumwandlung (z.B. 714-718) unter Verwendung zumindest eines dritten Strom- und/oder Spannungswerts 446 zu steuern, der durch zumindest eine erste Schleife 410a (Impl. 400a) und eine zweite Schleife 410b erhalten wird. In der ersten Schleife 410a kann zumindest eine erste Strom- und/oder Spannungskomponente (z.B. 442) erhalten werden aus:
- zumindest einem Strom- und/oder Spannungs-Feedback-Wert 408, der von dem Stromversorgungsnetz 708 erhalten wird; und
- zumindest einem lokalen-Leistungslast-Strom- und/oder einem Spannungsreferenzwert 422 für die lokale Leistungslast; und/oder

In der zweiten Schleife 410b kann zumindest eine zweite Strom- und/oder Spannungskomponente 492 erhalten werden aus:
- zumindest einem Strom- und/oder Spannungs-Feedback-Wert 408, der von dem Stromversorgungsnetz 708 erhalten wird; und
- zumindest einem Stromversorgungsnetz-Strom- und/oder Spannungsreferenzwert 472 für die lokale Leistungslast.

Die lokale Vorrichtung 710 kann ausgebildet sein, um die zumindest eine erste Strom- und/oder Spannungskomponente (z.B. 442), die an der zumindest einen ersten Schleife 410a erhalten wird, mit der zumindest einen zweiten Strom- und/oder Spannungskomponente 492 zusammenzusetzen (Addierer 444), die an zumindest einer zweiten Schleife 410b erhalten wird, um den dritten Strom- und/oder Spannungswert 446 zu erhalten.

Die erste Schleife 410a kann eine Phasenregelschleife (Phase locked loop, PLL) 410 aufweisen, die die Frequenz 406 in eine gewünschte Frequenz 414 transformiert (umwandelt). Eine RST/aß-Transform 412 kann benutzt werden, um α- und β-Komponenten 416 und 418 des Stroms, der über das Netzwerk 708 fließt, zu berechnen (RST are the Phase numbers). Eine aß/dq-Transform 420 berechnet eine direkte Stromkomponente 426 (I_{d}) und eine Quadraturstromkomponente 424 (I_{q}). Grundsätzlich wird von Block 420 eine Park-Transformation durchgeführt. In Ausführungsbeispielen kann eine Fehlerkontrolle gemäß der Quadraturstromkomponente 424 einer ausgewählte Quadraturstromkomponente 422 (I_{q_ref}) in Block 428 (die ein Proportional-Integral-Kontroller sein könnte) durchgeführt werden, um einen Fehler 430 der Quadraturstromkomponente zu berechnen. Die ausgewählte Quadraturstromkomponente 422 (I_{q_ref}) könnte von einem Prozessor berechnet werden und/oder von einem Benutzer ausgewählt werden. In Ausführungsbeispielen kann die direkte Stromkomponente 426 mit einer eingegeben direkten Stromkomponente 458 gemessen werden. Block 460 kann deswegen einen Fehler 432 der direkten Stromkomponenten berechnen. Der Block 460 kann ein Proportional-Integral-Kontroller sein. In Ausführungsbeispielen kann die Stromkomponente 428 von einem Block 456 berechnet werden, der einen Spannungsfehler zwischen der gemessenen Spannung 452 und einer ausgewählten Spannung 454 berechnet. Der Block 456 kann ein Proportional-Integral-Kontroller sein. Die Komponenten 430 und 432 können am Block 434 (durch die Frequenz 414) bzw. in die α- und β-Komponenten 436 und 438 umgewandelt (transformiert) werden. In Block 440 kann eine Transformation einen Strom 442 ergeben, der als Output der ersten Schleife 410a gilt.

Die erste Schleife 410a ist eine traditionelle Feedback-Schleife, die an einen Modulationsgenerator 448 eingegeben wird, um den Schaltungsaufbau 712 zu steuern (450).

Trotzdem haben die Erfinder verstanden, dass es möglich ist, den lokalen Schaltungsaufbau 712 zu steuern, um den Status des Versorgungsstromnetzes 708 zu modifizieren, um die Qualität zu erhöhen. Deswegen wurde eine neue zweite Schleife 410b gefertigt. Wie man durch die Implementation 400b sehen kann, wurde die Stromkomponente 442 mit einer zusätzlichen Stromkomponente 492 am Addierer 444 kombiniert. Diese zusätzliche Stromkomponente 492 berücksichtigt die Kenntnisse über z.B. die Blindleistung, die mit dem Stromversorgungsnetz 708 ausgetauscht werden sollte. Wie man sieht, kann die zweite Schleife 410b, als Input, die Frequenz 406 und die Stromkomponenten 408 des Stromversorgungsnetzes 708 verwenden. Selbst eine ausgewählte Quadraturstromkomponente 472 (I_{Q_ref}) und eine direkte Stromkomponente 476 (Setpoint) können z.B. von einem Prozessor und/oder von einer entfernten Steuerung (z.B. 750) berechnet oder empfangen werden.

Es ist bekannt, dass sich die Quadraturkomponente auf die Blindleistung bezieht, die mit dem Stromversorgungsnetz 708 auszutauschen ist. Bei den angegebenen Komponenten 472 und/oder 476 kann man den lokalen Schaltungsaufbau 712 die Blindleistung steuern, die mit dem Stromversorgungsnetz 708 zu tauschen ist.

Die zweite Schleife 410b kann ein PLL 462 aufweisen, das die gewünschte Frequenz 464 (z. B., die Harmonische, die kompensiert werden muss) ergibt. Die zweite Schleife 410b kann einen Block 467 aufweisen, der die Stromkomponenten des Stromversorgungsnetzes 708 in α- und β-Komponenten umwandelt. Die zweite Schleife 410b kann einen Block 466 aufweisen, der eine Quadraturstromkomponente 468 und eine direkte Stromkomponente 470 bereitstellt. Im Block 474 kann ein Quadraturstromkomponentenfehler 480 berechnet werden. Der Block 474 kann ein Proportional-Integral-Kontroller sein. Im Block 478 kann von der direkten Stromkomponente 470 ein Setpoint 476 subtrahiert werden, um einen Direktstromfehler 482 zu berechnen. Am Block 484 können die α- und β-Komponenten 486 und 488 ausgegeben werden. Um die α- und β-Komponenten 486 und 488 zu berechnen, kann die gewünschte Frequenz 464 genutzt werden. Am Block 490 kann die RST Komponente 492 berechnet werden, die dem Addierer 444 übergeben wird. Ein dritter Stromwert 446 kann berechnet werden und kann von Block 448 genutzt werden, um den lokalen Schaltungsaufbau 712 (z.B. durch Modulation) zu steuern.

Die erfinderische zweite Schleife 410b ermöglicht es, die elektrischen Parameter zu steuern, um z.B. die Blindleistung mit dem Stromnetz 708 auszutauschen, insbesondere nach dem Befehl 908, der von der zentralen Steuerung 750 empfangen wird.

Die Ansteuerung des Wechselrichters 712 basiert auf zwei Regelkreisen 410a und 410b. Der erste Regelkreis 410a dient dem normalen Betrieb als AIC (aktiv infeed converter) also z.B. als Netzwechselrichter oder Motorumrichter.

Während dieses Betriebs kann üblicherweise die Zwischenkreisspannung von der Umrichterregelung konstant gehalten werden, sodass Laständerungen idealerweise zu keiner Änderung der Zwischenkreisspannung führen und diese somit als eine annähernd ideale Spannungsquelle betrachtet werden kann. Zeitgleich kann die Blindleistung des Wechselrichters bei 50Hz vorgegeben werden, wodurch die Blindleistungskompensation erfolgt. Bei einer Blindleistung von Null verhält sich der Stromrichter für das Netz 708 annähernd wie eine ohmsche Last.

Der zweite Regelkreis 410b kann der gezielten Regelung einer einzelnen Oberschwingung dienen. Sollen mehrere Oberschwingungen von einem Umrichter beeinflusst werden so ist dieser Block dementsprechend mehrfach notwendig. Der Regelkreis, der rein der Kompensation von Oberschwingungen dient, synchronisiert sich mittels einer eigenen Phasenregelschleife kurz PLL 462 auf die gewünschte Oberschwingung und ermöglicht so die geregelte Einspeisung von Wirk- und Blindleistung bei der vorgegebenen Frequenz (z.B. 100 200 250 ... Hz bei 50 Hz Netzfrequenz).

Generell liegt der Regelung eines Netzwechselrichters meist mittels eine Vektorregelung zugrunde. Hierzu wird zunächst die Netzspannung erfasst und der Umrichter 712 mittels einer PLL 462 auf das Netz synchronisiert. Im nächsten Schritt werden die zeitkontinuierlichen Phasenströme erfassten in eine Zeigerdarstellung (ab-Koordinatensystem) transformiert. Eine Umdrehung des Netzzeigers entspricht dabei einer Netzperiode. Im Nächsten Schritt wird diese Koordinatensystem auf ein sich drehendes Koordinatensystem das dq-Koordinatensystem übertragen. Dies hat den Vorteil das nun die Blind und Wirkleistung als Gleichgrößen vorliegen und mittels einfacher PI-Regler getrennt eingestellt werden kann. Die Ausgänge der Regler werden nun über die Inverse ab und dq Transformation als zeitkontinuierliche Größe dargestellt und als Stellwert an den Pulsmustererzeuger und somit an den Wechselrichter übergeben.

Eine mögliche Regelung des Umricherverbundes könnte nun erfolgen indem die zentrale Steuerung 750 den untergeordneten Umrichtern vorgibt welche Oberschwingung/en jeweils von den einzelnen Teilnehmern zu bedienen sind und welcher q bzw. d Strom bei dieser/n Oberschwingung/en einzustellen ist/sind. Da es sich dabei um Gleichgrößen handelt ist auch die Kommunikation von der Zentrale zu den Teilnehmern bei intransienten Vorgängen nicht zeitkritisch und kann langsam erfolgen.

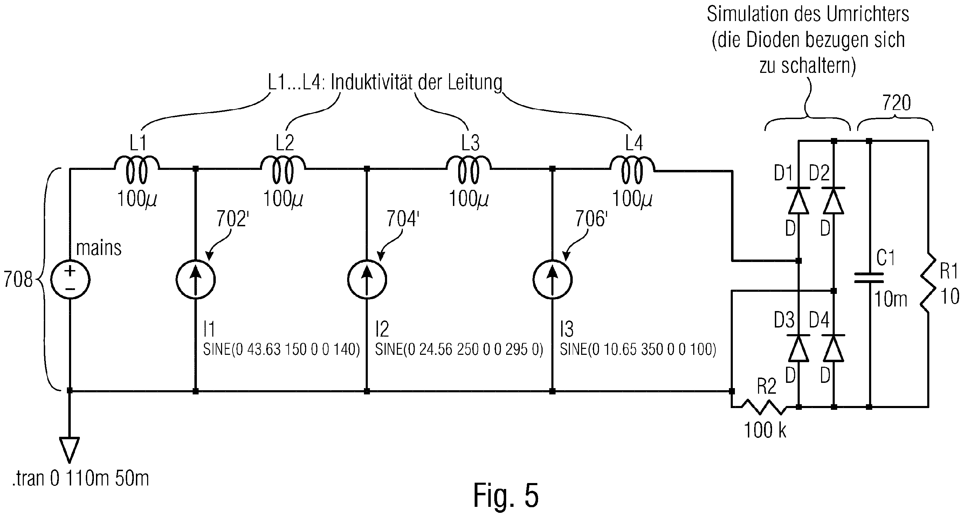

In einem Ausführungsbeispiel können die lokalen Vorrichtungen 702-706 so gesteuert werden, dass jeder mit einer bestimmten Frequenzen betrieben wird. Ein Beispiel wird in Fig. 5 gezeigt. Die lokale Vorrichtung 702' kann z.B. so gesteuert werden, dass keine erste Harmonische ins Netzwerk eingespeist wird. Trotzdem wird eine dritte Harmonische (Messwert: 43.63 A @ 150 Hz) vom Umrichter 704' eingespeist werden. Auch eine fünfte und siebte Harmonische wird vom Umrichter 706' eingespeist. Eine neunte Harmonische wird nicht eingespeist.

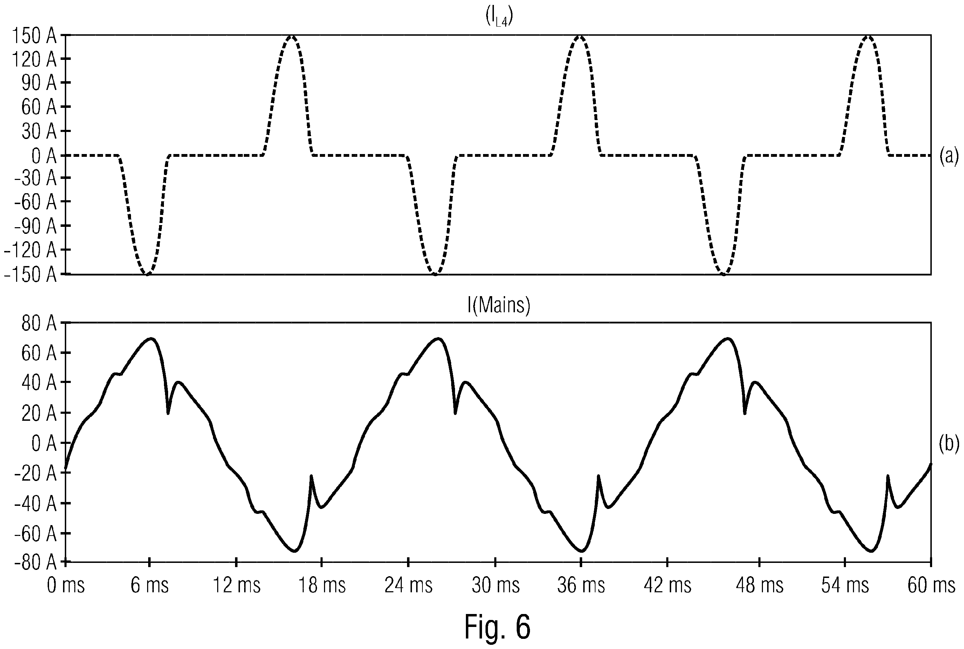

Fig. 6 zeigt eine Simulation des Stromversorgungsnetzes 708 (Fig. 6(b)) mit einem Strom, der durch die Induktivität L4 (Fig. 5) fließt (wobei L1...L4 die Induktivitäten der Leitung sind). Wie man sieht, selbst wenn der Strom nicht ideal ist (Fig. 6(a)), ist er trotzdem im Stromversorgungsnetz 708 akzeptierbar. Man muss anmerken, dass in Fig. 5 die Dioden D1, D2, D3, D4, statt der Transistoren die Umrichter 712 (die Dioden sind nur für die Simulation) sind, selbst wenn Transistoren benutzt werden. In Beispielen wird der lokale Schaltungsaufbau in Shunts mit dem Stromversorgungsnetz 708 verbunden.

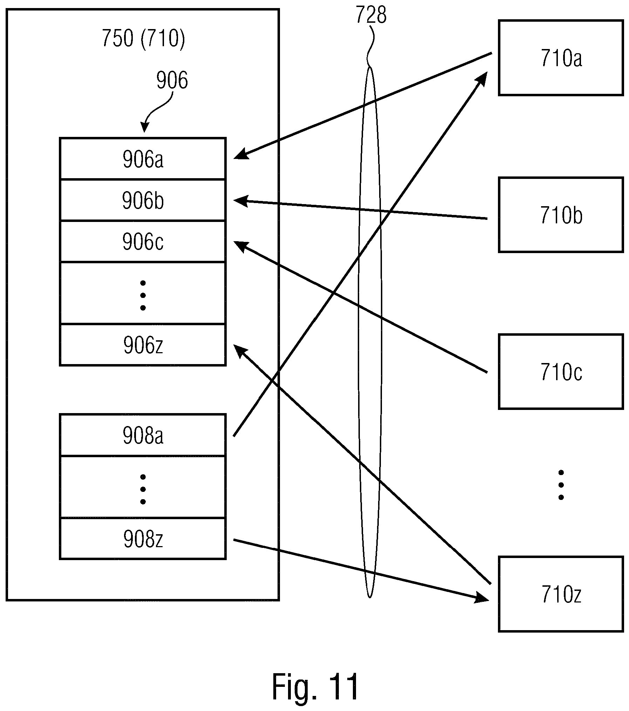

Fig. 11 zeigt eine Leistungsflusssteuerung 750, die von einer Mehrzahl von lokalen Vorrichtungen 710a, 710b, 710c, ..., 710z durch die Kommunikation 728 verbunden wird. Informationen 906a, 906b, 906c, 906z werden von lokalen Vorrichtungen empfangen. Befehle 908a ... 908z werden von den lokalen Vorrichtungen 710a, ... 710z gesendet. Jede lokale Vorrichtung verschickt seine Parameter an die Leistungsflusssteuerung 750 und erhält von der Leistungsflusssteuerung 750 die Befehle 908a ... 908z. Es besteht die Möglichkeit, dass eine sogenannte "Börse" errichtet wird, wo jede lokale Vorrichtung einen Vorschlag macht und auch einen Preis in der Information 906a ... 906z (z.B. in einem Kommunikationsfeld) übergibt. Die zentrale Leistungsflusssteuerung 750 kann eine Liste bereitstellen, die nach dem günstigsten Preis entscheidet und vielleicht verschiedene Services, die jede lokale Vorrichtung liefert bereitstellen. Natürlich können die Preise, die jede lokale Vorrichtung anbietet, geändert werden, je nachdem welcher Modus die lokale Vorrichtung umfasst.

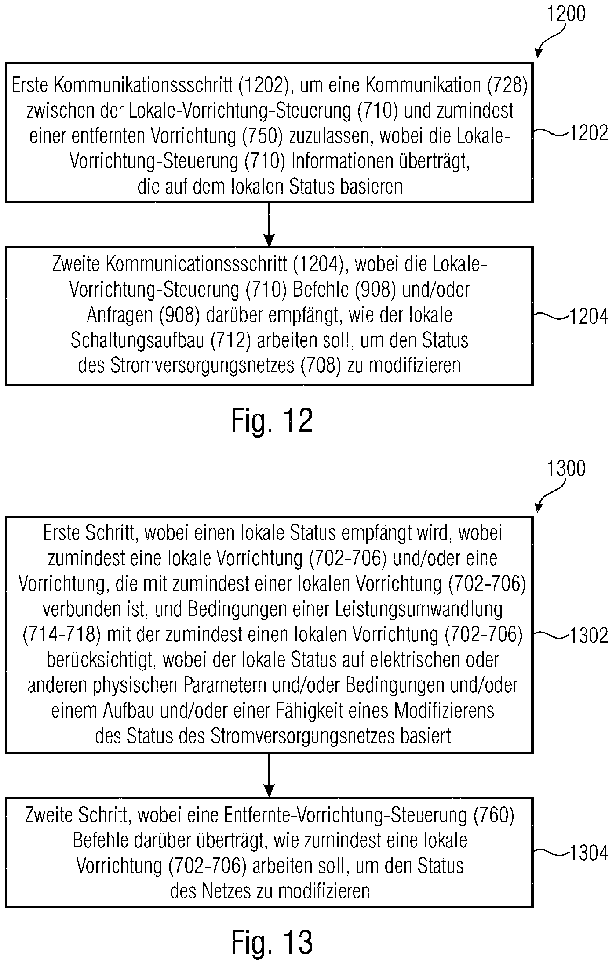

Fig. 12 zeigt eine Methode (1200) zur Verbindung mit einem Stromversorgungsnetz (708), wobei die Methode die folgende Schritte aufweist:
einen ersten Kommunikationsschritt (1202), um eine Kommunikation (728) zwischen der Lokale-Vorrichtung-Steuerung (710) und zumindest einer entfernten Vorrichtung (750) zuzulassen, wobei die Lokale-Vorrichtung-Steuerung (710) Informationen überträgt, die auf dem lokalen Status basieren; und
einen zweiter Kommunikationsschritt (1204), wobei die Lokale-Vorrichtung-Steuerung (710) Befehle (908) und/oder Anfragen (908) darüber empfängt, wie der lokale Schaltungsaufbau (712) arbeiten soll, um den Status des Stromversorgungsnetzes (708) zu modifizieren.

Fig. 13 zeigt eine Methode (1300) für die Steuerung eines Stromversorgungsnetzes (1300), wobei die Methode die folgende Schritte aufweist:
einen ersten Schritt (1302), wobei ein lokaler Status empfangen wird, wobei zumindest eine lokale Vorrichtung (702-706) und/oder eine Vorrichtung, die mit zumindest einer lokalen Vorrichtung (702-706) verbunden ist, und Bedingungen einer Leistungsumwandlung (714-718) mit der zumindest einen lokalen Vorrichtung (702-706) berücksichtigt, wobei der lokale Status auf elektrischen oder anderen physischen Parametern und/oder Bedingungen und/oder einem Aufbau und/oder einer Fähigkeit eines Modifizierens des Statuses des Stromversorgungsnetzes basiert, und
einen zweiten Schritt (1304), wobei eine Entfernte-Vorrichtung-Steuerung (760) Befehle darüber überträgt, wie zumindest eine lokale Vorrichtung (702-706) arbeiten soll, um den Status des Netzes zu modifizieren.

### Szenario

Die Erfindungsmeldung dient zur Verbesserung der Netzqualität im unteren kHz Bereich. **Vorhandene** Wechselrichterreserven des lokalen Netzverbundes werden genutz und diese zur Stabilisierung des lokalen Netzes (z.B., 708) bzw. zur Blindleistungskompensation zu verwenden. Die Wechselrichter (z.B., 712) dienen dabei nicht nur als Verbraucher ("Consumer"), um z.B. Motoren (z.B., 720, 724) anzutreiben, sondern speisen gleichzeitig auch Leistung ins Netz (z.B., 708) ein ("Producer"). Solche verteilten aktiven Filter kann man deshalb neudeutsch auch als "Prosumer" bezeichnen.

Als mögliches Szenario wird eine metallverarbeitende Fertigung angenommen. Es wird angenommen, dass die Werkzeugmaschinen (z.B. Fräs-, Dreh- und Prägemaschinen) über einen rückspeisefähigen Netzanschluss verfügen. Soll beispielsweise bei einer Fräsmaschine ein elektrischer Motor (z.B., 720, 724) abgebremst werden, kann die Bremsenergie teilweise elektrisch rekuperiert werden und in das Stromnetz (z.B., 708) zurückgespeist werden. Jeder Netzanschluss verfügt dabei über eine gewisse Leistungsfähigkeit, die sich nach der Spitzenleistung des Gerätes (z.B., 720-724) richtet. Da die Maschinen (z.B., 720-724) oft stillstehen beziehungsweise nicht mit ihrer Nennleistung betrieben werden, können diese Leistungsreserven intelligent genutzt werden. Das Stromnetz (z.B., 708) der Fabrik kann aktiv gestützt werden und es kann für eine bessere Netzstabilität gesorgt werden. Je nach Auslegung ist es möglich, die Anlage zur Kompensation der Verzerrungsblindleistung der Fabrik zu verkleinern, was sich vorteilhaft auf die Anschaffungskosten und den Wirkungsgrad der Fabrik auswirkt.

Die vorgestellte Idee kann in verschiedenen Varianten umgesetzt werden:
1. Verwendung **vorhandener Wechselrichter** (z.B., 712) mit Erweiterung um eine **zusätzliche Dienstleistung.** Die erweiterte **Funktionalität** kann in der **vorhandenen Steuerung** eines Wechselrichters (z.B., 712) **implementiert werden.** Es ist keine zusätzliche Hardware erforderlich. Die vorhandenen Filterstufen, die als Hardware vorliegen, können entfernt oder durch wesentlich kleinere Komponenten ersetzt werden.
2. Verwendung **neuartiger Wechselrichter** (z.B., 712), deren Steuerung die **Funktionalität der aktiven Blindleistungskompensation bereits beinhaltet.** Die Filterstufen sind wesentlich kleiner als beim aktuellen Stand der Technik oder können vollständig weggelassen werden. Die **zusätzliche Dienstleistung** kann durch das Ansteuerverfahren realisiert werden.
3. **Kombination beider obigen Varianten:** Verwendung von Wechselrichtern (z.B., 712) nach dem aktuellen Stand der Technik und neuartiger Ausführung im Verbund, so dass die neuartigen Wechselrichter die Blindleistungskompensation für die neuartigen Wechselrichter selbst übernehmen. Zusätzlich können die neuartigen Wechselrichter die Blindleistung der Wechselrichter nach dem aktuellen Stand der Technik mit kompensieren. Dies kann erforderlich sein, wenn die Wechselrichter nach aktuellem Stand der Technik nicht die volle Blindleistung kompensieren können, oder z.B. neue Normen / Vorgaben für die Netzqualität aufkommen.

### Funktionsweise

Für die Funktion die Qualität der Kompensationsleistung hängt somit maßgeblich von der Anzahl der vorhanden Wechselrichter und Leistungsreserven ab. Ein Einsatz dieser Technik ist also nur bei einem größeren Wechselrichterverbund sinnvoll.

Für den Betrieb wird zunächst eine Messstelle (z.B., bei Sensor 751) am Anschlusspunkt (z.B., 751a) (also dem Übergabepunkt des Stromanbieters), eine Leistungsflussteuerung sowie eine Kommunikationsmöglichkeit zu den Wechselrichtern (z.B., 712) angenommen. Die zentrale Messstelle (z.B. entfernter Vorrichtung S1, 750, in der Fig. 1) erfasst am Übergabepunkt (z.B., 751a) (dies stellt auch den Punkt dar an dem die Pegel geltenden Störaussendungen eingehalten werden müssen) drei Ströme und Spannungen entsprechend den drei Netzphasen (idealerweise jeweils gegen Neutralleiter). Das Verfahren ist auch für ein- oder zweiphasigen Betrieb möglich. Die Leistungsflussteuerung (entweder tatsächlich vorhandenes Gerät oder Verteilte Anwendung) kann auf Basis der Netzfrequenz (z.B., 50 Hz oder 60 Hz) die aktuelle Wirkleistung der Fabrik ermitteln. Daraus können die idealen Netzspannungen und -ströme bei reinem Wirkleistungsbezug ohne Blindleistung berechnet werden. Durch Subtraktion, z.B., der tatsächlich vorhandenen Netzspannungen und -ströme von den idealisierten, berechneten Netzspannungen und - strömen können die unerwünschten Anteile der Netzströme ermittelt werden. Diese Werte lassen sich spektral zerlegen und stellen den zu kompensierenden Anteil dar.

Bevor dieser Anteil durch den Verbund aus Umrichtern (z.B., 712) kompensiert werden kann, kann eine Übersicht über das momentane Kompensationsvermögen der Anlage erstellt werden. Hierzu meldet (z.B., zu Betriebsbeginn) jeder Lokale-Vorrichtung-Steuer (z.B., 710) mit einem netzseitigen Wechselrichter (z.B., 712) seine individuellen Daten (z.B., möglicher Frequenzbereich und Maximalleistung), z.B., bei 906. Während des Betriebs wird eine dauerhafte Kommunikation (z.B., 728) aufrechterhalten und die aktuelle Nennleistung / Leistungsreserve der Umrichter durchgegeben. Die Kommunikation kann, u.a., in zwei Varianten erfolgen:
1. Master-Slave-Konfiguration: Es gibt eine übergeordnete Leistungsflusssteuerung, die zum Beispiel auch die Sensorik für die netzseitigen Spannungen und -ströme beinhaltet (siehe S1 mit Variante 1 in Fig. 1 und Fig. 2). Die Wechselrichter (Slave, mit lokaler Steuerung C1...C3, 702-706, siehe Figs. 1 and 2) kommunizieren ausschließlich mit der übergeordneten Steuerung (Master) (Vom Master zu Slave: 728m; vom Slave zu Master: 728s). Es findet keine Kommunikation zwischen den Wechselrichtern statt.
2. Peer-to-peer-Architektur bzw. verteilte Komponentenarchitektur bzw. Daisy-chain Architektur (siehe Variante 2 in Fig. 1 und Fig. 2): Alle (oder mehrere) Komponenten (z.B., 750, 702-706) können miteinander direkt kommunizieren (z.B. 751a, 751b, 751c, etc.). Die einzelnen Komponenten weisen sich zum Betriebsbeginn automatisch Adressen zu. Da es keine zentrale Steuerung gibt, übernimmt die lokale Steuerung eines Lokalen-Vorrichtung-Steurung (z.B., 710) mit einem Wechselrichters die Funktion der zentralen Steuerung 750.

Basierend auf diesen Daten verteilt die zentrale Leistungsflussteuerung nach Variante 2 oder 2 die zu kompensierenden Anteile an die Umrichter im Verbund im Form von zu kompensierender /zu erzeugender Oberschwingung und Amplitude.

Der Systemverbund kann so ausgeführt sein, dass die Umrichter (z.B., 712), die die Funktion der verteilten aktiven Filter beinhalten, mit positivem Leistungsfluss (z.B., 714) oder negativem Leistungsfluss (z.B., 716) ausgeführt sind. Mit positivem Leistungsfluss ist gemeint, dass Strom vom Netzeinspeisungspunkt (z.B., 751a) durch den Umrichter (z.B., 712) zu einem Verbraucher (z.B., 720) fließt (Consumer, siehe Fig. 1). Mit negativem Leistungsfluss ist gemeint, dass Strom vom Umrichter (z.B., 712) zum Netzeinspeisungspunkt (z.B., 751a) fließt (Producer, siehe Fig. 2).

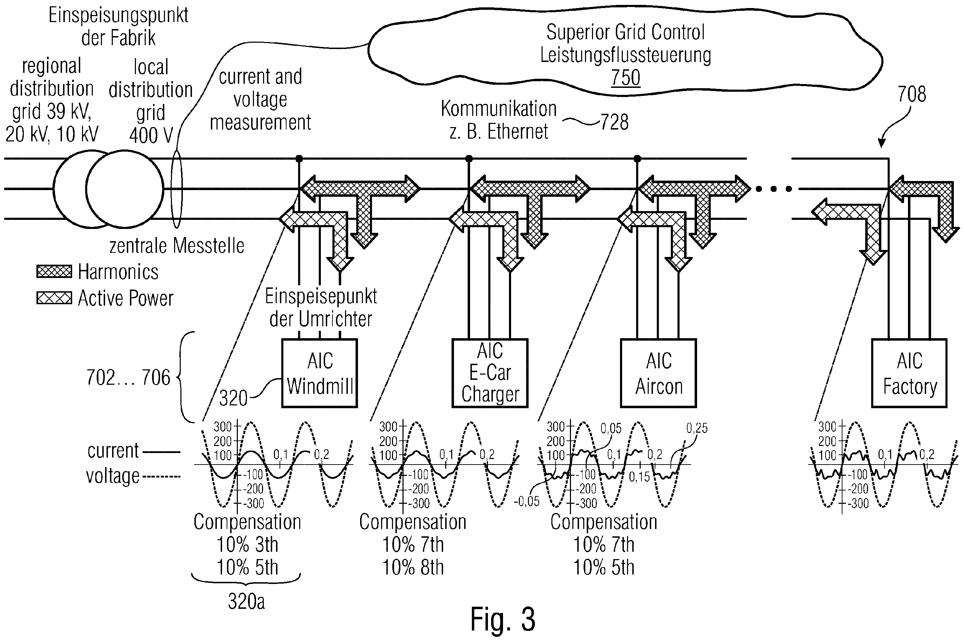

Als Beispiel ist in Fig. 3 die Funktionsweise des Ansteuerverfahrens gezeigt. Die Leistungsflusssteuerung (e.g., entfernte Vorrichtung 750) legt beispielsweise fest, dass der erste Verbraucher links im Bild ("AIC Windmill" 320) die dritte und fünfte Harmonische der Netzfrequenz zu jeweils 10% kompensiert (320a), d.h. Leistung ins Netz (e.g., 708) eingespeist wird. Im zeitlichen Mittel beträgt die eingespeiste Leistung null, da es sich um sinusförmige Wechselgrößen ohne Gleichspannungsversatz handelt. Die Simulation in Fig. 5 und Fig. 6 liefert den Nachweis der Funktionsweise, die sich auch analytisch durch Rechnung beweisen lässt.

Für die Kompensation der Störströme verfügt jeder Umricher (z.B., 712) über eine oder mehrere frei konfigurierbare PLL's (Phase Locked Loop, z.B. 420, 462) mit aß- und dq-Transformationseinheit. Um die übermittelte Amplitude einzuspeisen stellt die PLL ihre Kompensationseinheit zunächst auf die gewünschte Frequenz (z.B., bei 414, 464) ein und speist dann mittels eines allgemein bekannten Verfahrens zur Netzeinspeisung (also z.b. aß -/dq-Transformation, 412, 420, 467, 466) dann Regelung und Rücktransformation, z.B. bei 410a, 410b) den Wert in das Netz ein. In einer alternativen Ausführungsform kann auch der Laststrom eines Wechselrichters so moduliert werden, dass sowohl der Betrieb des Wechselrichters als auch die Blindleistungskompensation möglich ist. Ein derartiges Frequenzspektrum lässt sich beispielsweise durch programmierbare Gatetreiber für die Leistungshalbleiterschalter realisieren.

Misst man den Strom am Eingang der einzelnen Umrichter (z.B., 712), so ist dieser wegen der örtlichen Trennung normalerweise nicht störungsfrei. Die Summe der Kompensationsströme sorgt allerdings am Einspeisepunkt des Netzes Für eine Auslöschung der Störströme.

Eine komplette Eliminierung der Kompensationsanlage der Fabrik ist insbesondere möglich, wenn dauerhaft genügend Wechselrichterreserve im Verbund vorhanden ist. Hierfür ist bei der Dimensionierung bzw. Auslegung der Anlage zu sorgen.

Im Gegensatz zur Nutzung einer zentralen Steuerungseinheit kann die Leistungsflusssteuerung auch als netzwerkbasiertes IT System ausgeführt sein. Dies ermöglicht mehr Steuerungsmöglichkeiten der Filter und die Nutzung von vorausschauender Wartung als auch vorausschauender Steuerung einer hohen Anzahl aktiver Filter. Zusätzlich könnte ein solches System in einen Netzwerkverbund aus mehreren Fertigungsanlagen integriert werden, so dass auch eine Blindleistungskompensation über die baulichen Grenzen einzelner Fertigungsanlagen hinaus möglich ist.

Durch Beispielen können konventionelle EMV-Filter eingespart und Kosten des Gesamtesystems deutlich reduziert werden. Bisherige EMV-Filter (Hardware) können durch intelligente Steuerung von Verbrauchern (z.B. Umrichtern) ersetz werden und die EMV-Normen trotzdem zu erfüllen.

Es können Preisvorteile durch das Einsparen von passiven Filtern erzielt werden. Störungen werden nicht passiv gedampft, (Wärme im Widerstand) und der Laststrom muss weniger Bauelemente durchfließen, was sich positiv auf den Wirkungsgrad auswirkt. Durch den Kommunikation ist auch ein Überwachung möglich.

### Finanzielle Nutzungsmöglichkeiten

Es besteht die Möglichkeit, die Umrichter mit der neuartigen Funktionalität ohne zusätzliche Kosten an die Kunden herauszugeben und durch die Software und regelmäßige Updates Geld zu verdienen (Abo-Modell).

Weiterhin ist ein Wartungsvertrag möglich, der auch Cloud-basiert sein kann.

Weiterhin sind "ancillary services" denkbar, bei denen ein vorhandenes Stromnetz stabilisiert wird. Als Besitzer/Betreiber einer Energiequelle (z.B. Batterie, Brennstoffzelle, ...) würde man Geld damit verdienen, dass mit solchen verteilten aktiven Filtern das Netz stabilisiert wird und die gesteigerte Netzqualität vom Netzbetreiber oder anderen Verbrauchsstellen, die die Netzqualität negativ beeinflussen, durch Geld entlohnt wird.

### Andere Asufürungen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hard-ware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Eine lokale Vorrichtung (702-706) zur Verbindung mit einem Stromversorgungsnetz (708), wobei die lokale Vorrichtung (702-706) folgende Merkmale aufweist:
eine lokale Leistungslast (720, 722, 724);
ein lokaler Schaltungsaufbau (712);
eine Lokale-Vorrichtung-Steuerung (710), die ausgebildet ist, um den lokalen Schaltungsaufbau (712) zu steuern, um eine lokale Leistungsumwandlung (714-718) zwischen dem Stromversorgungsnetz (708) und der lokalen Leistungslast (720, 722, 724) durchzuführen, um die lokale Leistungslast (720, 722, 724) anzutreiben, so dass Wirkleistung mit dem Stromversorgungsnetz (708) ausgetauscht wird;
eine Kommunikationssteuerung (726), die ausgebildet ist, um eine Kommunikation (728) zwischen der Lokale-Vorrichtung-Steuerung (710) und zumindest einer entfernten Vorrichtung (750) zuzulassen, so dass:
die Lokale-Vorrichtung-Steuerung (710) Informationen (906) überträgt, die auf dem lokalen Status basieren,
wobei der lokale Status den lokalen Schaltungsaufbau (712) und/oder die lokale Leistungslast (720, 722, 724) berücksichtigt, und
wobei der lokale Status auf elektrischen und/oder anderen physischen Parametern und/oder Bedingungen und/oder einem Aufbau und/oder einer Fähigkeit eines Modifizierens des Status des Stromversorgungsnetzes basiert, und
die Lokale-Vorrichtung-Steuerung (710) Befehle und/oder Anfragen (908) von der entfernten Vorrichtung (750) darüber empfängt, wie der lokale Schaltungsaufbau (712) arbeiten soll, um den Status des Stromversorgungsnetzes (708) zu modifizieren,
wobei die lokale Vorrichtung (702, 706) ausgebildet ist zum Durchführen der Funktion eines verteilten aktiven Filters (730), wobei der lokale Schaltungsaufbau (712) ausgebildet ist, um an einer Operation eines verteilten aktiven Filters teilzunehmen, um eine Blindleistung in dem Stromversorgungsnetz (708) zu kompensieren,
wobei die lokale Leistungslast (720, 722, 724) ein Elektromotor ist,
wobei die Lokale-Vorrichtung-Steuerung (710) ausgebildet ist, um die folgenden Schritte durchzuführen:
- Empfangen von Befehlen und/oder Anfragen, die dem Austausch von Blindleistung der lokalen Leistungslast (720, 722, 724) mit dem Stromversorgungsnetz (708) zugeordnet sind, von der entfernten Vorrichtung (750);
- Verifizieren der effektiven Fähigkeit eines Austauschens der angeforderten Blindleistung, um zu entscheiden, ob der Austausch von Blindleistung durchgeführt werden soll; und
- Anzeigen der Entscheidung für die entfernte Vorrichtung (750).

2. Die lokale Vorrichtung (702, 706) nach Anspruch 1, wobei das Stromversorgungsnetz (708) mehrphasig ist.

3. Die lokale Vorrichtung (702-706) gemäß Anspruch 1 oder 2, wobei die lokale Vorrichtung (702-706) ausgebildet ist, um als Informationen (906), die auf dem lokalen Status basieren, zumindest eines der folgenden Elemente bereitzustellen:
- Vorschläge über die Operation für den Austausch von Blindleistung der lokalen Leistungslast (720, 724) mit dem Stromversorgungsnetz (708);
- Informationen über die Wirkleistung und/oder Blindleistung und/oder Nennleistung für den Austausch von Blindleistung zwischen der lokalen Leistungslast (720, 724) und dem Stromversorgungsnetz (708);
- Informationen über das Frequenzintervall für den Austausch von Blindleistung der lokalen Leistungslast (720, 724) mit dem Stromversorgungsnetz (708);
- Informationen über die erforderliche elektrische Leistung durch die Last in der Vergangenheit und/oder in der Zukunft;
- Informationen über den Wartungsstatus der Lastvorrichtung und ihrer Teilkomponenten.

4. Die lokale Vorrichtung (702-706) gemäß einem der vorherigen Ansprüche, die ausgebildet ist, um in zumindest einem der folgenden Modi zu arbeiten:
- einem Arbeitsmodus (1002), bei dem der lokale Schaltungsaufbau (712) eine lokale Leistungsumwandlung (714-718) zwischen dem Stromversorgungsnetz (708) und einer lokalen Leistungslast (720, 724) durchführt, um die lokale Leistungslast (720, 724) zu betreiben;
- einem aktiven Blindleistungskompensationsmodus (1004), bei dem der lokale Schaltungsaufbau (712) eine lokale Leistungsumwandlung (714-718) zwischen dem Stromversorgungsnetz (708) und einer lokalen Leistungslast (720, 724) durchführt, um die Blindleistung zu kompensieren;
- einem kombinierten Modus (1006), bei dem der lokale Schaltungsaufbau (712) gleichzeitig Folgendes durchführt:
eine lokale Wirkleistungsumwandlung (714, 718) zwischen dem Stromversorgungsnetz (708) und einer lokalen Leistungslast (720, 724); und
eine lokale Blindleistungsumwandlung (714, 718) zwischen dem Stromversorgungsnetz (708) und einer lokalen Leistungslast (720, 724), um die Blindleistung zu kompensieren,
wobei die lokale Vorrichtung (702-706) ausgebildet ist, um der entfernten Vorrichtung (750) als Informationen (906), die auf dem lokalen Status basieren, Folgendes anzuzeigen:
- den Modus, in dem diese momentan arbeitet.

5. Die lokale Vorrichtung (702-706) gemäß einem der vorherigen Ansprüche, die ausgebildet ist, um in zumindest einem der folgenden Modi zu arbeiten:
- einem Arbeitsmodus (1002), bei dem der lokale Schaltungsaufbau (712) eine lokale Leistungsumwandlung (714, 718) zwischen dem Stromversorgungsnetz (708) und einer lokalen Leistungslast (720, 724) durchführt, um die lokale Leistungslast (720, 724) zu betreiben;
- einem aktiven Blindleistungskompensationsmodus (1004), bei dem der lokale Schaltungsaufbau (712) eine lokale Leistungsumwandlung (714-718) zwischen dem Stromversorgungsnetz (708) und einer lokalen Leistungslast (720, 724) durchführt, um die Blindleistung zu kompensieren;
- einem kombinierten Modus (1006), bei dem der lokale Schaltungsaufbau (712) gleichzeitig Folgendes durchführt:
eine lokale Wirkleistungsumwandlung (714, 718) zwischen dem Stromversorgungsnetz (708) und einer lokalen Leistungslast (720, 724); und
eine lokale Blindleistungsumwandlung (714, 718) zwischen dem Stromversorgungsnetz (708) und einer lokalen Leistungslast (720, 724), um die Blindleistung zu kompensieren,
wobei die lokale Vorrichtung (702-706) ausgebildet ist, um der entfernten Vorrichtung (750) als Informationen (906), die auf dem lokalen Status basieren, Folgendes anzuzeigen:
- einen Modus, bei dem die lokale Vorrichtung (702-706) bereit ist zu arbeiten.

6. Die lokale Vorrichtung (702-706) gemäß Anspruch 4 oder 5, die ausgebildet ist, um zumindest einen der folgenden Schritte durchzuführen:
- Bestimmen eines zukünftigen Status der lokalen Leistungslast (720, 724);
- Bestimmen der Fähigkeit des Austauschens von Blindleistung mit dem Stromversorgungsnetz (708);
- Übermitteln einer Anzeige der Fähigkeit des Austauschens von Blindleistung mit dem Stromversorgungsnetz (708) an die entfernte Vorrichtung (750);
- Erhalten eines Befehls darüber, wie Blindleistung mit dem Stromversorgungsnetz (708) auszutauschen ist;
- Einstellen des Leistungsumwandlungsmodus, des Aktivkompensationsmodus oder des kombinierten Modus.

7. Die lokale Vorrichtung (702-706) gemäß einem der vorherigen Ansprüche, wobei die lokale Leistungslast (720, 724) eine Fräsmaschine, eine Drehmaschine oder eine Prägemaschine ist.

8. Die lokale Vorrichtung (702-706) gemäß einem der vorherigen Ansprüche, bei der der lokale Schaltungsaufbau (712) ausgebildet ist, um die lokale Leistungsumwandlung (714-718) zu und/oder von einer lokalen Leistungslast (720, 724) unter Verwendung zumindest eines dritten Strom- und/oder Spannungswerts (446) zu steuern, der durch zumindest eine erste Schleife (410a) und zumindest eine zweite Schleife (410b) erhalten wird, wobei:
in der ersten Schleife (410a) zumindest eine erste Strom- und/oder Spannungskomponente (442) erhalten wird aus:
- zumindest einem Strom- und/oder Spannungs-Feedback-Wert (408), der von dem Stromversorgungsnetz (708) erhalten wird; und
- zumindest einem Lokale-Leistungslast-Strom- und/oder -Spannungsreferenzwert (422) für die lokale Leistungslast (720, 724); und/oder in der zweiten Schleife (410b) zumindest eine zweite Strom- und/oder Spannungskomponente (492) erhalten wird aus:
- zumindest einem Strom- und/oder Spannungs-Feedback-Wert (408), der von dem Stromversorgungsnetz (708) erhalten wird; und
- zumindest einem Stromversorgungsnetz-Strom- und/oder -Spannungsreferenzwert (472) für die lokale Leistungslast (720, 724),
wobei die lokale Vorrichtung (702-706) ausgebildet ist, um die zumindest eine erste Strom- und/oder Spannungskomponente (442), die an der zumindest einer ersten Schleife (410a) erhalten wird, mit der zumindest einen zweiten Strom- und/oder Spannungskomponente (492) zusammenzusetzen (444), die an zumindest einer zweiten Schleife (410b) erhalten wird, um den dritten Strom- und/oder Spannungswert (446) zu erhalten.

9. Die lokale Vorrichtung gemäß Anspruch 8, bei der die zumindest eine zweite Schleife (410b) ausgebildet ist, um eine zusätzliche Stromkomponente (492) basierend auf einem Sollpunkt (476) zu berechnen, wobei die zusätzliche Stromkomponente (492) mit dem Strom (442), der durch die zumindest eine erste Schleife (410a) erhalten wird, zusammengesetzt wird (444), um die Blindleistung des Stromversorgungsnetzes (708) zu modifizieren.

10. Die lokale Vorrichtung gemäß einem der vorherigen Ansprüche, bei der der lokale Schaltungsaufbau (712) ausgebildet ist, um die lokale Leistungsumwandlung (714-718) auf der Basis eines Stromversorgungsnetz-Stromreferenzwerts (472) basierend auf einer Quadraturstromkomponente (I_{q_ref}) zu steuern, die die Leistung steuert, die mit dem Stromversorgungsnetz (708) ausgetauscht werden soll.

11. Die lokale Vorrichtung gemäß einem der vorherigen Ansprüche, wobei die lokale Vorrichtung (702-706) ausgebildet ist, um einen Gleichstrom, DC, (202) in einen Wechselstrom, AC, (204) umzuwandeln und den DC (202) in das Stromversorgungsnetz (708) einzuspeisen, um das Stromversorgungsnetz (708) mit Wirkleistung zu versorgen,
wobei der lokale Schaltungsaufbau (712) ausgebildet ist, um den Austausch von Blindleistung mit dem Stromversorgungsnetz (708) gemäß dem Befehl und/oder der Anfrage von der entfernten Vorrichtung (750) zu steuern.

12. Ein System, umfassend
eine Mehrzahl von lokalen Vorrichtungen (702-706) nach einem der Ansprüche 1 bis 11, und
eine entfernte Vorrichtung (750) für die Steuerung eines Stromversorgungsnetzes (708), wobei die entfernte Vorrichtung (750) folgende Merkmale aufweist:
eine Entfernte-Vorrichtung-Steuerung (760), die ausgebildet ist, um den Status des Stromversorgungsnetzes (708) zu steuern;
eine Kommunikationssteuerung (776), die ausgebildet ist, um die Kommunikation (728) zwischen der Entfernte-Vorrichtung-Steuerung (760) und der Mehrzahl von den lokalen Vorrichtungen (702-706) zuzulassen, so dass:
die Entfernte-Vorrichtung-Steuerung (760) die Informationen empfängt, die auf den lokalen Status der Mehrzahl von lokalen Vorrichtungen (702-706) basieren,
wobei die lokalen Status der lokalen Vorrichtungen (702-706) Bedingungen der Leistungsumwandlung (714, 718) mit den lokalen Vorrichtungen (702-706) berücksichtigen, und
die Entfernte-Vorrichtung-Steuerung (760) die Befehle darüber überträgt, wie die lokalen Vorrichtungen (702-706) arbeiten sollen, um die Status des Netzes zu modifizieren,
wobei die entfernte Vorrichtung (750) ausgebildet ist, um die folgenden Schritte durchzuführen:
- Senden von den Befehlen und/oder Anfragen, die dem Austausch von Blindleistung der lokalen Leistungslasten (720, 724) mit dem Stromversorgungsnetz (708) zugeordnet sind;
- Empfangen der Entscheidungen von den lokalen Leistungslasten (720, 724) bezüglich deren effektiven Fähigkeit des Austauschens der angeforderten Blindleistung.

13. Das System gemäß Anspruch 12, wobei die entfernte Vorrichtung (750) mindestens einen Sensor (751) benutzt, der elektrische Messwerte ermittelt, wobei der mindestens eine Sensor (751) so konfiguriert ist, dass der Strom, die Spannung und/oder die Frequenz des Stromversorgungsnetzes gemessen werden, so dass Kenntnis von dem eingespeisten Strom erhalten wird.

14. Das System gemäß Anspruch 12 oder 13, wobei die entfernte Vorrichtung (750) ausgebildet ist, um Kenntnis von einem Harmonischen-Inhalt in dem Strom des Stromversorgungsnetzes (708) zu erhalten und bei der zumindest einen lokalen Vorrichtung (702-706) anzufragen und/oder dieser zu befehlen, eine Harmonische-Kompensationsfunktion durchzuführen.

15. Eine Methode (1200) zur Verbindung mit einem Stromversorgungsnetz (708), wobei die Methode die folgende Schritte aufweist:
einen ersten Kommunikationsschritt (1202), um eine Kommunikation (728) zwischen der Lokale-Vorrichtung-Steuerung (710) der lokalen Vorrichtung (702-706) gemäß einem der Ansprüche 1-11 und zumindest einer entfernten Vorrichtung (750) zuzulassen, so dass die Lokale-Vorrichtung-Steuerung (710) Informationen überträgt, die auf dem lokalen Status basieren,
wobei der lokale Status den lokalen Schaltungsaufbau (712) und/oder die lokale Leistungslast (720, 722, 724) der lokalen Vorrichtung (702-706) berücksichtigt, und
wobei der lokale Status auf elektrischen und/oder anderen physischen Parametern und/oder Bedingungen und/oder einem Aufbau und/oder einer Fähigkeit eines Modifizierens des Status des Stromversorgungsnetzes basiert; und
einen zweiten Kommunikationsschritt (1204), wobei die Lokale-Vorrichtung-Steuerung (710) Befehle (908) und/oder Anfragen (908) von der entfernten Vorrichtung (750) darüber empfängt, wie der lokale Schaltungsaufbau (712) arbeiten soll, um den Status des Stromversorgungsnetzes (708) zu modifizieren, indem mittels der Lokale-Vorrichtung-Steuerung (710) die folgenden Schritte durchgeführt werden:
- Empfangen von den Befehlen und/oder Anfragen, die einem Austausch von Blindleistung der lokalen Leistungslast (720, 722, 724) mit dem Stromversorgungsnetz (708) zugeordnet sind, von der entfernten Vorrichtung (750);
- Verifizieren der effektiven Fähigkeit des Austauschens der angeforderten Blindleistung, um zu entscheiden, ob der Austausch von Blindleistung durchgeführt werden soll; und
- Anzeigen der Entscheidung für die entfernte Vorrichtung (750).

## Claims

1. A local device (702-706) for connecting to a power supply network (708), the local device (702-706) comprising:
a local power load (720, 722, 724);
local circuitry (712);
a local-device controller (710) configured to control the local circuitry (712) to perform local power conversion (714-718) between the power supply network (708) and the local power load (720, 722, 724) so as to drive the local power load (720, 722, 724) such that active power is exchanged with the power supply network (708);
a communication controller (726) configured to allow communication (728) between the local-device controller (710) and at least one remote device (750), so that:
the local-device controller (710) transmits information based on the local status,
wherein the local status takes into account the local circuitry (712) and/or the local power load (720, 722, 724), and
wherein the local status is based on electric and/or other physical parameters and/or conditions and/or a setup and/or a capability of modifying the status of the power supply network, and
the local-device controller (710) receives from the remote device (750) commands and/or requests (908) on how the local circuitry (712) is to operate so as to modify the status of the power supply network (708),
wherein the local device (702, 706) is configured to perform the function of a distributed active filter (730), the local circuitry (712) being configured to participate in an operation of a distributed active filter so as to compensate for reactive power in the power supply network (708),
wherein the local power load (720, 722, 724) is an electric motor, wherein the local-device controller (710) is configured to perform the following steps:
- receiving commands and/or requests, which are associated with exchanging reactive power of the local power load (720, 722, 724) with the power supply network (708), from the remote device (750);
- verifying the effective ability of exchanging the requested reactive power so as to decide whether or not the exchange of reactive power is to be performed; and
- indicating the decision for the remote device (750).

2. The local device (702, 706) as claimed in claim 1, wherein the power supply network (708) is multiphase.

3. The local device (702-706) as claimed in claims 1 or 2, the local device (702-706) being configured to provide at least one of the following elements as information (906) based on the local status:
- suggestions on the operation for exchanging reactive power of the local power load (720, 724) with the power supply network (708);
- information about the active power and/or reactive power and/or rated power for exchanging reactive power between the local power load (720, 724) and the power supply network (708);
- information about the frequency interval for exchanging reactive power of the local power load (720, 724) with the power supply network (708);
- information about the required electric power on the part of the load in the past and/or in the future;
- information about the maintenance status of the load device and its partial components.

4. The local device (702-706) as claimed in any of the previous claims, configured to operate in at least one of the following modes:
- a work mode (1002), wherein the local circuitry (712) performs local power conversion (714-718) between the power supply network (708) and a local power load (720, 724) so as to operate the local power load (720, 724);
- an active reactive-power compensation mode (1004), wherein the local circuitry (712) performs local power conversion (714-718) between the power supply network (708) and a local power load (720, 724) so as to compensate for the reactive power;
- a combined mode (1006), wherein the local circuitry (712) performs the following at the same time:
- local active-power conversion (714, 718) between the power supply network (708) and a local power load (720, 724); and
- local reactive-power conversion (714, 718) between the power supply network (708) and a local power load (720, 724) so as to compensate for the reactive power,
the local device (702-706) being configured to indicate the following to the remote device (750) as information (906) based on the local status:
- the mode in which same is currently operating.

5. The local device (702-706) as claimed in any of the previous claims, configured to operate in at least one of the following modes:
- a work mode (1002), wherein the local circuitry (712) performs local power conversion (714, 718) between the power supply network (708) and a local power load (720, 724) so as to operate the local power load (720, 724),
- an active reactive-power compensation mode (1004), wherein the local circuitry (712) performs local power conversion (714-718) between the power supply network (708) and a local power load (720, 724) so as to compensate for the reactive power;
- a combined mode (106), wherein the local circuitry (712) performs the following at the same time:
- local active-power conversion (714, 718) between the power supply network (708) and a local power load (720, 724); and
- local reactive-power conversion (714, 718) between the power supply network (708) and a local power load (720, 724) so as to compensate for the reactive power,
the local device (702-706) being configured to indicate the following to the remote device (750) as information (906) based on the local status:
- the mode in which the local device (702-706) is ready to operate.

6. The local device (702-706) as claimed in claims 4 or 5, configured to perform at least one of the following steps:
- determining a future status of the local power load (720, 724);
- determining the ability of exchanging reactive power with the power supply network (708);
- transmitting to the remote device (750) an indication of the ability of exchanging reactive power with the power supply network (708);
- receiving a command about how reactive power is to be exchanged with the power supply network (708);
- setting the power conversion mode, the active compensation mode, or the combined mode.

7. The local device (702-706) as claimed in any of the previous claims, wherein the local power load (720, 724) is a milling machine, a turning lathe, or an embossing machine.

8. The local device (702-706) as claimed in any of the previous claims, wherein the local circuitry (712) is configured to control the local power conversion (714-718) to and/or from a local power load (720, 724) while using at least one third current and/or voltage value (446) which is obtained by at least one first loop (410a) and at least one second loop (410b), wherein:
within the first loop (410a), at least a first current and/or voltage component (442) is obtained from:
- at least one current and/or voltage feedback value (408) obtained from the power supply network (708); and
- at least one local-power load current reference value and/or local-power load voltage reference value (422) for the local power load (720, 724); and/or
within the second loop (410b), at least a second current and/or voltage component (492) is obtained from:
- at least one current and/or voltage feedback value (408) obtained from the power supply network (708); and
- at least one power supply network current reference value and/or power supply network voltage reference value (472) for the local power load (720, 724),
the local device (702-706) being configured to compose (444) the at least one first current and/or voltage component (442), which is obtained at the at least one first loop (410a), with the at least one second current and/or voltage component (492), which is obtained at at least one second loop (410b), so as to obtain the third current and/or voltage value (446).

9. The local device as claimed in claim 8, wherein the at least one second loop (410b) is configured to calculate an additional current component (492) on the basis of a target point (476), wherein the additional current component (492) is composed (444) with the current (442) obtained through the at least one first loop (410a), so as to modify the reactive power of the power supply network (708).

10. The local device as claimed in any of the previous claims, wherein the local circuitry (712) is configured to control the local power conversion (714-718) on the basis of a power supply network current reference value (472) based on a quadrature current component (I_{q_ref}), which controls the power to be exchanged with the power supply network (708).

11. The local device as claimed in any of the previous claims, the local device (702-706) being configured to convert a direct current, DC, (202) to an alternating current, AC, (204) and to feed the DC (202) into the power supply network (708) so as to supply the power supply network (708) with active power,
wherein the local circuitry (712) is configured to control the exchange of reactive power with the power supply network (708) in accordance with the command and/or the request from the remote device (750).

12. A system including
a plurality of local devices (702-706) as claimed in any of claims 1 to 11, and
a remote device (750) for controlling a power supply network (708), the remote device (750) comprising:
a remote-device controller (760) configured to control the status of the power supply network (708);
a communication controller (776) configured to allow communication (728) between the remote-device controller (760) and the plurality of local devices (702-706), so that:
the remote-device controller (760) receives the information that is based on the local status of the plurality of local devices (702-706),
wherein the local statuses of the local devices (702-706) take into account conditions of the power conversion (714, 718) with the local devices (702-706), and
wherein the remote-device controller (760) transmits the commands about how the local devices (702-706) are to operate so as to modify the statuses of the network,
wherein the remote device (750) is configured to perform the following steps:
- transmitting the commands and/or requests associated with exchanging reactive power of the local power loads (720, 724) with the power supply network (708);
- receiving the decisions from the local power loads (720, 724) with regard to their effective abilities of exchanging the requested reactive power.

13. The system as claimed in claim 12, wherein the remote device (750) uses at least one sensor (751) determining electric measurement values, wherein the at least one sensor (751) is configured such that the current, the voltage, and/or the frequency of the power supply network are measured, so that knowledge of the supplied current will be obtained.

14. The system as claimed in claims 12 or 13, wherein the remote device (750) is configured to obtain knowledge of a harmonics content within the current of the power supply network (708), and to request and/or command the at least one local device (702-706) to perform a harmonics compensation function.

15. A method (1200) of connecting to a power supply network (708), the method comprising:
a first communication step (1202) so as to allow communication (728) between the local-device controller (710) of the local device (702-706) as claimed in any of claims 1 to 11 and at least one remote device (750), so that the local-device controller (710) will transmit information based on the local status,
the local status taking into account the local circuitry (712) and/or the local power load (720, 722, 724) of the local device (702-706), and
wherein the local status is based on electric and/or other physical parameters and/or conditions and/or a setup and/or an ability of modifying the status of the power supply network; and
a second communication step (1204), wherein the local-device controller (710) receives commands (908) and/or requests (908), from the remote device (750), about how the local circuitry (712) is to operate so as to modify the status of the power supply network (708) in that the following steps are performed by the local-device controller (710):
- receiving the commands and/or requests, which are associated with exchanging reactive power of the local power load (720, 722, 724) with the power supply network (708), from the remote device (750);
- verifying the effective ability of exchanging the requested reactive power so as to decide whether or not the exchange of reactive power is to be performed; and
- indicating the decision for the remote device (750).

## Revendications

1. Dispositif local (702 à 706) pour la connexion à un réseau d'alimentation électrique (708), le dispositif local (702 à 706) présentant les caractéristiques suivantes:
une charge de puissance locale (720, 722, 724);
une structure de circuit locale (712);
un moyen de commande de dispositif local (710) qui est conçu pour commander la structure de circuit locale (712) pour effectuer une conversion de puissance locale (714 à 718) entre le réseau d'alimentation électrique (708) et la charge de puissance locale (720, 722, 724) pour piloter la charge de puissance locale (720, 722, 724) de sorte que la puissance active soit échangée avec le réseau d'alimentation électrique (708);
un moyen de commande de communication (726) qui est conçu pour permettre une communication (728) entre le moyen de commande de dispositif local (710) et au moins un dispositif à distance (750), de sorte que:
le moyen de commande de dispositif local (710) transmette les informations (906) qui sont basées sur l'état local,
dans lequel l'état local tient compte de la structure de circuit locale (712) et/ou de la charge de puissance locale (720, 722, 724), et
dans lequel l'état local est basé sur les paramètres et/ou conditions électriques et/ou autres physiques et/ou sur une structure et/ou une capacité de modifier l'état du réseau d'alimentation électrique, et
le moyen de commande de dispositif local (710) reçoit des ordres et/ou des demandes (908) du dispositif à distance (750) relatifs à la manière dont doit fonctionner la structure de circuit locale (712) pour modifier l'état du réseau d'alimentation électrique (708),
le dispositif local (702, 706) étant conçu pour réaliser la fonction d'un filtre actif distribué (730), dans lequel la structure de circuit locale (712) est conçue pour participer à une opération d'un filtre actif distribué pour compenser une puissance réactive dans le réseau d'alimentation électrique (708),
dans lequel la charge de puissance locale (720, 722, 724) est un moteur électrique,
dans lequel le moyen de commande de dispositif local (710) est conçu pour réaliser les étapes suivantes consistant à:
- recevoir du dispositif à distance (750) des ordres et/ou des demandes qui sont associés à l'échange de la puissance réactive de la charge de puissance locale (720, 722, 724) avec le réseau d'alimentation électrique (708);
- vérifier la capacité effective d'un échange de la puissance réactive demandée pour décider si doit être effectué l'échange de puissance réactive; et
- indiquer la décision pour le dispositif à distance (750).

2. Dispositif local (702, 706) selon la revendication 1, dans lequel le réseau d'alimentation électrique (708) est à phases multiples.

3. Dispositif local (702 à 706) selon la revendication 1 ou 2, dans lequel le dispositif local (702 à 706) est conçu pour fournir, comme informations (906) qui sont basées sur l'état local, au moins un des éléments suivants:
- propositions sur l'opération pour l'échange de puissance réactive de la charge de puissance locale (720, 724) avec le réseau d'alimentation électrique (708);
- les informations sur la puissance active et/ou la puissance réactive et/ou la puissance nominale pour l'échange de la puissance réactive entre la charge de puissance locale (720, 724) et le réseau d'alimentation électrique (708);
- les informations sur l'intervalle de fréquence pour l'échange de la puissance réactive de la charge de puissance locale (720, 724) avec le réseau d'alimentation électrique (708);
- les informations sur la puissance électrique requise par la charge par le passé et/ou à l'avenir;
- les informations sur l'état d'entretien du dispositif de charge et de ses composants partiels.

4. Dispositif local (702 à 706) selon l'une des revendications précédentes, qui est configuré pour fonctionner dans au moins l'un des modes suivants:
- un mode de fonctionnement (1002) dans lequel la structure de circuit locale (712) effectue une conversion de puissance locale (714 à 718) entre le réseau d'alimentation électrique (708) et une charge de puissance locale (720, 724) pour faire fonctionner la puissance locale (720, 724);
- un mode de compensation de puissance réactive actif (1004), où la structure de circuit locale (712) effectue une conversion de puissance locale (714 à 718) entre le réseau d'alimentation électrique (708) et une charge de puissance locale (720, 724) pour compenser la puissance réactive;
- un mode combiné (1006) dans lequel la structure de circuit locale (712) effectue simultanément ce qui suit:
une conversion de puissance active locale (714, 718) entre le réseau d'alimentation électrique (708) et une charge de puissance locale (720, 724); et
une conversion de puissance réactive locale (714, 718) entre le réseau d'alimentation électrique (708) et une charge de puissance locale (720, 724) pour compenser la puissance réactive,
dans lequel le dispositif local (702 à 706) est conçu pour indiquer pour le dispositif à distance (750), comme informations (906) qui sont basées sur l'état local, ce qui suit:
- le mode dans lequel il fonctionne en ce moment.

5. Dispositif local (702 à 706) selon l'une des revendications précédentes, qui est conçu pour fonctionner dans au moins l'un des modes suivants:
- un mode de fonctionnement (1002) dans lequel la structure de circuit locale (712) effectue une conversion de puissance locale (714, 718) entre le réseau d'alimentation électrique (708) et une charge de puissance locale (720, 724) pour faire fonctionner la charge de puissance locale (720, 724);
- un mode de compensation de puissance réactive actif (1004) dans lequel la structure de circuit locale (712) effectue une conversion de puissance locale (714 à 718) entre le réseau d'alimentation électrique (708) et une charge de puissance locale (720, 724) pour compenser la puissance réactive;
- un mode combiné (1006) dans lequel la structure de circuit locale (712) effectue simultanément ce qui suit:
une conversion de puissance active locale (714, 718) entre le réseau d'alimentation électrique (708) et une charge de puissance locale (720, 724); et
une conversion de puissance réactive locale (714, 718) entre le réseau d'alimentation électrique (708) et une charge de puissance locale (720, 724) pour compenser la puissance réactive,
dans lequel le dispositif local (702 à 706) est conçu pour indiquer pour le dispositif à distance (750), comme informations (906) qui sont basées sur l'état local, ce qui suit:
- un mode dans lequel le dispositif local (702 à 706) est prêt à fonctionner.

6. Dispositif local (702 à 706) selon la revendication 4 ou 5, qui est conçu pour effectuer au moins l'une des étapes suivantes consistant à:
- déterminer un état futur de la charge de puissance locale (720, 724);
- déterminer la capacité de l'échange de la puissance réactive avec le réseau d'alimentation électrique (708);
- transmettre au dispositif à distance (750) une indication de la capacité de l'échange de la puissance réactive avec le réseau d'alimentation électrique (708);
- recevoir un ordre relatif à la manière dont la puissance réactive doit être échangée avec le réseau d'alimentation électrique (708);
- régler le mode de conversion de puissance, le mode de compensation actif ou le mode combiné.

7. Dispositif local (702 à 706) selon l'une des revendications précédentes, dans lequel la charge de puissance locale (720, 724) est une fraiseuse, un tour ou une machine à poinçonner.

8. Dispositif local (702 à 706) selon l'une des revendications précédentes, dans lequel la structure de circuit locale (712) est conçue pour commander la conversion de puissance locale (714 à 718) vers et/ou à partir d'une charge de puissance locale (720, 724) à l'aide d'au moins une troisième valeur de courant et/ou de tension (446) qui est obtenue par au moins une première boucle (410a) et au moins une deuxième boucle (410b), dans lequel:
dans la première boucle (410a) est obtenue au moins une première composante de courant et/ou de tension (442) à partir de:
- au moins une valeur de rétroaction de courant et/ou de tension (408) qui est obtenue à partir du réseau d'alimentation électrique (708); et
- au moins une valeur de référence de courant et/ou de tension de charge de puissance locale (422) pour la charge de puissance locale (720, 724); et/ou
dans la deuxième boucle (410b) est obtenue au moins une deuxième composante de courant et/ou de tension (492) à partir de:
- au moins une valeur de rétroaction de courant et/ou de tension (408) qui est obtenue à partir du réseau d'alimentation électrique (708); et
- au moins une valeur de référence de courant et/ou de tension du réseau d'alimentation électrique (472) pour la charge de puissance locale (720, 724),
dans lequel le dispositif local (702 à 706) est conçu pour assembler (444) l'au moins une première composante de courant et/ou de tension (442) qui est obtenue dans l'au moins une première boucle (410a) avec l'au moins une deuxième composante de courant et/ou de tension (492) qui est obtenue dans l'au moins une deuxième boucle (410b), pour obtenir la troisième valeur de courant et/ou de tension (446).

9. Dispositif local selon la revendication 8, dans lequel l'au moins une deuxième boucle (410b) est conçue pour calculer une composante de courant additionnelle (492) sur base d'un point de consigne (476), dans lequel la composante de courant additionnelle (492) est assemblée (444) avec le courant (442) qui est obtenu par l'au moins une première boucle (410a) pour modifier la puissance réactive du réseau d'alimentation électrique (708).

10. Dispositif local selon l'une des revendications précédentes, dans lequel la structure de circuit locale (712) est conçue pour commander la conversion de puissance locale (714 à 718) sur base d'une valeur de référence de courant de réseau d'alimentation électrique (472) sur base d'une composante de courant en quadrature (I_{q_ref}) qui commande la puissance qui doit être échangée avec le réseau d'alimentation électrique (708).

11. Dispositif local selon l'une des revendications précédentes, dans lequel le dispositif local (702 à 706) est conçu pour convertir un courant continu, DC, (202) en un courant alternatif, AC, (204) et pour alimenter le courant continu (DC) (202) vers le réseau d'alimentation électrique (708) pour alimenter le réseau d'alimentation électrique (708) en puissance active,
dans lequel la structure de circuit locale (712) est conçue pour commander l'échange de puissance réactive avec le réseau d'alimentation électrique (708) selon l'ordre et/ou la demande du dispositif à distance (750).

12. Système, comportant
une pluralité de dispositifs locaux (702 à 706) selon l'une des revendications 1 à 11, et
un dispositif à distance (750) pour la commande d'un réseau d'alimentation électrique (708), où le dispositif à distance (750) présente les caractéristiques suivantes:
un moyen de commande de dispositif à distance (760) qui est conçu pour commander l'état du réseau d'alimentation électrique (708);
un moyen de commande de communication (776) qui est conçu pour permettre la communication (728) entre le moyen de commande de dispositif à distance (760) et la pluralité de dispositifs locaux (702 à 706) de sorte que:
le moyen de commande de dispositif à distance (760) reçoive les informations qui sont basées sur l'état local de la pluralité de dispositifs locaux (702 à 706),
dans lequel les états locaux des dispositifs locaux (702 à 706) tiennent compte des conditions de la conversion de puissance (714, 718) avec les dispositifs locaux (702 à 706), et
le moyen de commande de dispositif à distance (760) transmet les ordres relatifs à la manière dont les appareils locaux (702 à 706) doivent fonctionner pour modifier les états du réseau,
dans lequel le dispositif à distance (750) est conçu pour effectuer les étapes suivantes consistant à:
- envoyer des ordres et/ou des demandes qui sont associés à l'échange de puissance réactive des charges de puissance locales (720, 724) avec le réseau d'alimentation électrique (708);
- recevoir les décisions des charges de puissance locales (720, 724) relatives à leur capacité effective d'échange de la puissance réactive demandée.

13. Système selon la revendication 12, dans lequel le dispositif à distance (750) utilise au moins un capteur (751) qui détermine les valeurs de mesure électriques, dans lequel l'au moins un capteur (751) est configuré de sorte que soient mesurés le courant, la tension et/ou la fréquence du réseau d'alimentation électrique, de sorte que soit obtenue une connaissance du courant alimenté.

14. Système selon la revendication 12 ou 13, dans lequel le dispositif à distance (750) est conçu pour obtenir connaissance d'un contenu d'harmoniques dans le flux du réseau d'alimentation électrique (708) et pour demander à au moins un dispositif local (702 à 706) et/ou l'ordonner d'effectuer une fonction de compensation d'harmonique.

15. Procédé (1200) de connexion à un réseau d'alimentation électrique (708), dans lequel le procédé présente les étapes suivantes:
une première étape de communication (1202) pour permettre une communication (728) entre le moyen de commande de dispositif local (710) du dispositif local (702 à 706) selon l'une des revendications 1 à 11 et au moins un dispositif à distance (750) de sorte que le moyen de commande de dispositif local (710) transmette des informations qui sont basées sur l'état local,
dans lequel l'état local tient compte de la structure de circuit locale (712) et/ou de la charge de puissance locale (720, 722, 724) du dispositif local (702 à 706), et
dans lequel l'état local est basé sur les paramètres et/ou conditions électriques et/ou autres physiques et/ou sur une structure et/ou une capacité de modifier l'état du réseau d'alimentation électrique, et
une deuxième étape de communication (1204), où le moyen de commande de dispositif local (710) reçoit des ordres (908) et/ou des demandes (908) du dispositif à distance (750) relatifs à la manière dont doit fonctionner la structure de circuit locale (712) pour modifier l'état du réseau d'alimentation électrique (708) en ce qu'à l'aide du moyen de commande de dispositif local (710) sont effectuées les étapes suivantes consistant à:
- recevoir du dispositif à distance (750) les ordres et/ou les demandes qui sont associés à un échange de puissance réactive de la charge de puissance locale (720, 722, 724) avec le réseau d'alimentation électrique (708);
- vérifier la capacité effective de l'échange de la puissance réactive demandée pour décider si l'échange de puissance réactive doit être effectué; et
- indiquer la décision pour le dispositif à distance (750).
